# EUROPEAN PATENT APPLICATION

(11) **EP 4 250 786 A1**
(43) Date of publication of application: **27.09.2023**
(21) Application number: 20967746.7
(22) Date of filing: 31.12.2020
(51) Int. Cl.: H04W 8/02

(54) **EVENT MANAGEMENT METHOD AND APPARATUS**

(71) Applicant: Huawei Technologies Co., Ltd., Shenzhen, Guangdong 518129 (CN)
(72) Inventor: YAN, Yali, Shenzhen, Guangdong 518129 (CN); ZHU, Qianghua, Shenzhen, Guangdong 518129 (CN); ZHU, Fangyuan, Shenzhen, Guangdong 518129 (CN)
(74) Representative: Körber, Martin Hans
(86) International application number: PCT/CN2020/142171
(87) International publication number: WO 2022/141407

(57) **Abstract**

An event management method and an apparatus thereof are provided. The method includes: A subscriber data management network element receives first request information from a first mobility management network element, where the first request information includes an identifier of UE and an event notification address of a network exposure network element, the first request information is for requesting to send identification information and address information of a second mobility management network element to the event notification address, and there is no interface between the first mobility management network element and the second mobility management network element (S601). The subscriber data management network element receives the identification information and the address information of the second mobility management network element from the second mobility management network element (S602). When the UE is in a single-registration mode, the subscriber data management network element sends the identification information and the address information of the second mobility management network element to the foregoing event notification address (S603). This manner helps the network exposure network element successfully address the second mobility management network element.

## Description

### TECHNICAL FIELD

This application relates to the field of communication technologies, and in particular, to an event management method and an apparatus thereof.

### BACKGROUND

Based on a network capability exposure architecture defined by the 3rd generation partnership project (3rd generation partnership project, 3GPP) in a 5th generation (5th-generation, 5G), a 3GPP network can securely provide a core service capability to a third party (for example, an application function (application, AF)).

Specifically, the AF may request a network exposure function (network exposure function, NEF) in the architecture to perform event monitoring (event monitoring), for example, event monitoring on user equipment (user equipment, UE). Correspondingly, after receiving the event monitoring request, the NEF interacts with a 5G core network element (for example, an access and mobility management function (access and mobility management function, AMF) that serves the UE) to implement event monitoring.

However, for UE that supports 4th-generation (4th-generation, 4G) access and 5G access, the UE may move from a 5G network to a 4G network. Currently, a network exposure function network element cannot address a mobility management entity (mobility management entity, MME) that serves the UE after the UE moves to the 4G network. As a result, event monitoring cannot be continuously performed on the UE.

### SUMMARY

Embodiments of this application provide an event management method and an apparatus thereof. A subscriber data management network element sends identification information and address information of a second mobility management network element to a network exposure network element. This helps the network exposure network element successfully address the second mobility management network element.

According to a first aspect, this application provides an event management method. The method may be performed by a subscriber data management network element, or a chip used in the subscriber data management network element. The method includes the following. The subscriber data management network element receives first request information from a first mobility management network element, where the first request information includes an identifier of UE and an event notification address of a network exposure network element, the first request information is for requesting the subscriber data management network element to send identification information and address information of a second mobility management network element to the event notification address, the second mobility management network element is a mobility management network element that serves the UE in a second communication system, the first mobility management network element is a mobility management network element that serves the UE in a first communication system, and there is no interface between the first mobility management network element and the second mobility management network element. The subscriber data management network element receives the identification information and the address information of the second mobility management network element from the second mobility management network element, and sends first information to the event notification address when the UE is in a single-registration mode, where the first information includes the identification information and the address information of the second mobility management network element.

In this technical solution, the subscriber data management network element sends the identification information and the address information of the second mobility management network element to the network exposure network element. This helps the network exposure network element successfully address the second mobility management network element. Further, this helps continue to perform event monitoring on the UE by using the second mobility management network element.

In a possible implementation, the first information further includes first indication information, and the first indication information indicates that a communication system that serves the UE changes.

In a possible implementation, the first request information further includes second indication information, and the second indication information indicates that there is no interface between the first mobility management network element and the second mobility management network element. A specific implementation in which the subscriber data management network element sends the first information to the event notification address may be as follows: The subscriber data management network element sends the first information to the event notification address based on the second indication information.

According to a second aspect, this application provides another event management method. The method may be performed by a network exposure network element, or a chip used in the network exposure network element. The method includes the following. The network exposure network element receives first information from a subscriber data management network element, where the first information includes identification information and address information of a second mobility management network element, and the second mobility management network element is a mobility management network element that serves UE in a second communication system. The network exposure network element sends first event monitoring request information to the second mobility management network element based on the identification information and the address information of the second mobility management network element, where the first event monitoring request information includes an identifier of the UE and an event notification address of the network exposure network element, and the first event monitoring request information indicates the second mobility management network element to monitor a first event of the UE.

In this technical solution, the network exposure network element may successfully address the second mobility management network element by using the identification information and the address information of the second mobility management network element, and may further send the first event monitoring request information to the second mobility management network element. Therefore, event monitoring may continue to be performed on the UE by using the second mobility management network element.

In a possible implementation, the first information further includes first indication information, and the first indication information indicates that a communication system that serves the UE changes.

In a possible implementation, the method further includes the following. The network exposure network element receives second information from a first mobility management network element, where the second information indicates the first mobility management network element to stop monitoring a second event of the UE, the second information is sent by the first mobility management network element when the first mobility management network element determines that the communication system that serves the UE changes, and the first mobility management network element is a mobility management network element that serves the UE in a first communication system.

In a possible implementation, the second information further indicates a reason for stopping monitoring, and the reason for stopping monitoring is that the communication system that serves the UE changes.

In a possible implementation, the second information includes a first event report, and the first event report is an event report that has been generated by the first mobility management network element but has not been reported to the foregoing event notification address.

In this technical solution, all event reports generated when the second event of the UE is monitored in the first communication system may be fed back to the network exposure network element, that is, this helps avoid loss of the event report.

In a possible implementation, there are a plurality of second events. The method further includes the following. The network exposure network element sends third information to an application function network element, where the third information indicates a third event that cannot be monitored, the second event includes the third event and the first event, and the second event is an event that the application function network element indicates to monitor.

In this technical solution, the application function network element can learn of an event (that is, the third event) that the second communication system does not support monitoring. This helps improve charging accuracy.

In a possible implementation, the third information further indicates a reason why monitoring cannot be performed, and the reason why monitoring cannot be performed is that the communication system that serves the UE changes.

In a possible implementation, the first event monitoring request information further indicates a first event parameter required for monitoring the first event, and second event monitoring request information further indicates a second event parameter required for monitoring the second event. The method further includes the following. The network exposure network element determines the first event parameter based on the second event parameter.

In a possible implementation, the first event is an event that the second communication system supports monitoring.

According to a third aspect, this application provides still another event management method. The method may be performed by a first mobility management network element, or a chip used in the first mobility management network element. The method includes the following. The first mobility management network element sends first request information to a subscriber data management network element, where the first request information includes an identifier of UE and an event notification address of a network exposure network element, the first request information is for requesting the subscriber data management network element to send identification information and address information of a second mobility management network element to the event notification address, the first mobility management network element is a mobility management network element that serves the UE in a first communication system, the second mobility management network element is a mobility management network element that serves the UE in a second communication system, and there is no interface between the first mobility management network element and the second mobility management network element.

This technical solution helps the network exposure network element successfully address the second mobility management network element. Further, this helps continue to perform event monitoring on the UE by using the second mobility management network element.

In a possible implementation, the first request information further includes second indication information, and the second indication information indicates that there is no interface between the first mobility management network element and the second mobility management network element.

In a possible implementation, the method further includes the following. The first mobility management network element sends second information to the foregoing event notification address when determining that a communication system that serves the UE changes, where the second information indicates the first mobility management network element to stop monitoring a second event of the UE.

In a possible implementation, the second information further indicates a reason for stopping monitoring, and the reason for stopping monitoring is that the communication system that serves the UE changes.

In a possible implementation, the second information includes a first event report, and the first event report is an event report that has been generated by the first mobility management network element but has not been reported to the foregoing event notification address.

In this technical solution, all event reports generated when the second event of the UE is monitored in the first communication system may be fed back to the network exposure network element, that is, this helps avoid loss of the event report.

According to a fourth aspect, an embodiment of this application provides still another event management method. The method may be performed by a subscriber data management network element, a network exposure network element, and a first mobility management network element, or a chip used in the subscriber data management network element, a chip used in the network exposure network element, and a chip used in the first mobility management network element. The method includes the following. The first mobility management network element sends first request information to the subscriber data management network element, where the first request information includes an identifier of UE and an event notification address of the network exposure network element, the first request information is for requesting the subscriber data management network element to send identification information and address information of a second mobility management network element to the event notification address, the first mobility management network element is a mobility management network element that serves the UE in a first communication system, the second mobility management network element is a mobility management network element that serves the UE in a second communication system, and there is no interface between the first mobility management network element and the second mobility management network element. The subscriber data management network element receives the first request information, receives the identification information and the address information of the second mobility management network element from the second mobility management network element, and sends first information to the event notification address when the UE is in a single-registration mode, where the first information includes the identification information and the address information of the second mobility management network element. The network exposure network element receives the first information and sends first event monitoring request information to the second mobility management network element based on the identification information and the address information of the second mobility management network element, where the first event monitoring request information includes the identifier of the UE and the event notification address of the network exposure network element, and the first event monitoring request information indicates the second mobility management network element to monitor a first event of the UE.

According to a fifth aspect, an embodiment of this application provides a communication apparatus. The communication apparatus has some or all functions of the subscriber data management network element in the method examples in the first aspect. For example, a function of the communication apparatus may have functions in some or all embodiments of this application, or may have a function of independently implementing any embodiment in this application. The function may be implemented by hardware, or may be implemented by hardware executing corresponding software. The hardware or the software includes one or more units or modules corresponding to the functions.

In an implementation, a structure of the communication apparatus may include a transceiver module and a processing module. The processing module is configured to support the communication apparatus in performing a corresponding function in the foregoing method. The transceiver module is configured to support communication between the communication apparatus and another device. The communication apparatus may further include a storage module. The storage module is coupled to the processing module and the transceiver module, and stores a computer program and data that are necessary for the communication apparatus.

In an implementation, the communication apparatus includes the processing module, configured to invoke the transceiver module to receive first request information from a first mobility management network element, where the first request information includes an identifier of UE and an event notification address of a network exposure network element, the first request information is for requesting the communication apparatus to send identification information and address information of a second mobility management network element to the event notification address, the second mobility management network element is a mobility management network element that serves the UE in a second communication system, the first mobility management network element is a mobility management network element that serves the UE in a first communication system, and there is no interface between the first mobility management network element and the second mobility management network element. The processing module is further configured to invoke the transceiver module to receive the identification information and the address information of the second mobility management network element from the second mobility management network element and send first information to the event notification address when the UE is in a single-registration mode, where the first information includes the identification information and the address information of the second mobility management network element.

In an example, the processing module may be a processor, the transceiver module may be a transceiver, and the storage module may be a memory.

In an implementation, the communication apparatus includes the processor, configured to invoke the transceiver to receive first request information from a first mobility management network element, where the first request information includes an identifier of UE and an event notification address of a network exposure network element, the first request information is for requesting the communication apparatus to send identification information and address information of a second mobility management network element to the event notification address, the second mobility management network element is a mobility management network element that serves the UE in a second communication system, the first mobility management network element is a mobility management network element that serves the UE in a first communication system, and there is no interface between the first mobility management network element and the second mobility management network element. The processor is further configured to invoke the transceiver to receive the identification information and the address information of the second mobility management network element from the second mobility management network element and send first information to the event notification address when the UE is in a single-registration mode, where the first information includes the identification information and the address information of the second mobility management network element.

According to a sixth aspect, an embodiment of this application provides another communication apparatus. The communication apparatus has some or all functions of the network exposure network element in the method examples in the second aspect. For example, a function of the communication apparatus may have functions in some or all embodiments of this application, or may have a function of independently implementing any embodiment in this application. The function may be implemented by hardware, or may be implemented by hardware executing corresponding software. The hardware or the software includes one or more units or modules corresponding to the functions.

In an implementation, a structure of the communication apparatus may include a transceiver module and a processing module. The processing module is configured to support the communication apparatus in performing a corresponding function in the foregoing method. The transceiver module is configured to support communication between the communication apparatus and another device. The communication apparatus may further include a storage module. The storage module is coupled to the processing module and the transceiver module, and stores a computer program and data that are necessary for the communication apparatus.

In an implementation, the communication apparatus includes the processing module, configured to invoke the transceiver module to receive first information from a subscriber data management network element, where the first information includes identification information and address information of a second mobility management network element, and the second mobility management network element is a mobility management network element that serves UE in a second communication system. The processing module is further configured to invoke the transceiver module to send first event monitoring request information to the second mobility management network element based on the identification information and the address information of the second mobility management network element, where the first event monitoring request information includes an identifier of the UE and an event notification address of the communication apparatus, and the first event monitoring request information indicates the second mobility management network element to monitor a first event of the UE.

In an example, the processing module may be a processor, the transceiver module may be a transceiver, and the storage module may be a memory.

In an implementation, the communication apparatus includes the processor, configured to invoke the transceiver to receive first information from a subscriber data management network element, where the first information includes identification information and address information of a second mobility management network element, and the second mobility management network element is a mobility management network element that serves UE in a second communication system. The processor is further configured to invoke the transceiver to send first event monitoring request information to the second mobility management network element based on the identification information and the address information of the second mobility management network element, where the first event monitoring request information includes an identifier of the UE and an event notification address of the communication apparatus, and the first event monitoring request information indicates the second mobility management network element to monitor a first event of the UE.

According to a seventh aspect, an embodiment of this application provides still another communication apparatus. The communication apparatus has some or all functions of the first mobility management network element in the method examples in the third aspect. For example, a function of the communication apparatus may have functions in some or all embodiments of this application, or may have a function of independently implementing any embodiment in this application. The function may be implemented by hardware, or may be implemented by hardware executing corresponding software. The hardware or the software includes one or more units or modules corresponding to the functions.

In an implementation, a structure of the communication apparatus may include a transceiver module and a processing module. The processing module is configured to support the communication apparatus in performing a corresponding function in the foregoing method. The transceiver module is configured to support communication between the communication apparatus and another device. The communication apparatus may further include a storage module. The storage module is coupled to the processing module and the transceiver module, and stores a computer program and data that are necessary for the communication apparatus.

In an implementation, the communication apparatus includes the processing module, configured to invoke the transceiver module to send first request information to a subscriber data management network element, where the first request information includes an identifier of UE and an event notification address of a network exposure network element, the first request information is for requesting the subscriber data management network element to send identification information and address information of a second mobility management network element to the event notification address, the communication apparatus is a mobility management network element that serves the UE in a first communication system, the second mobility management network element is a mobility management network element that serves the UE in a second communication system, and there is no interface between the communication apparatus and the second mobility management network element.

In an example, the processing module may be a processor, the transceiver module may be a transceiver, and the storage module may be a memory.

In an implementation, the communication apparatus includes the processor, configured to invoke the transceiver to send first request information to a subscriber data management network element, where the first request information includes an identifier of UE and an event notification address of a network exposure network element, the first request information is for requesting the subscriber data management network element to send identification information and address information of a second mobility management network element to the event notification address, the communication apparatus is a mobility management network element that serves the UE in a first communication system, the second mobility management network element is a mobility management network element that serves the UE in a second communication system, and there is no interface between the communication apparatus and the second mobility management network element.

According to an eighth aspect, an embodiment of this application provides an event management system. The system includes one or more communication apparatuses according to the fifth aspect to the seventh aspect.

According to a ninth aspect, an embodiment of the present invention provides a computer-readable storage medium. The computer-readable storage medium stores a computer program. The computer program includes program instructions. When the program instructions are executed by a communication apparatus, the communication apparatus is enabled to perform the method according to the first aspect.

According to a tenth aspect, an embodiment of the present invention provides a computer-readable storage medium. The computer-readable storage medium stores a computer program. The computer program includes program instructions. When the program instructions are executed by a communication apparatus, the communication apparatus is enabled to perform the method according to the second aspect.

According to an eleventh aspect, an embodiment of the present invention provides a computer-readable storage medium. The computer-readable storage medium stores a computer program. The computer program includes program instructions. When the program instructions are executed by a communication apparatus, the communication apparatus is enabled to perform the method according to the third aspect.

According to a twelfth aspect, this application further provides a computer program product including a computer program. When the computer program product runs on a computer, the computer is enabled to perform the method according to the first aspect.

According to a thirteenth aspect, this application further provides a computer program product including a computer program. When the computer program product runs on a computer, the computer is enabled to perform the method according to the second aspect.

According to a fourteenth aspect, this application further provides a computer program product including a computer program. When the computer program product runs on a computer, the computer is enabled to perform the method according to the third aspect.

### BRIEF DESCRIPTION OF DRAWINGS

FIG. 1a is a schematic diagram of a 4G network capability exposure architecture;
FIG. 1b is a schematic diagram of a 5G network capability exposure architecture;
FIG. 1c is a schematic diagram of an interworking architecture between a 4G network and a 5G network;
FIG. 2 is a schematic diagram of an event monitoring procedure in a 4G network;
FIG. 3 is a schematic diagram of an event monitoring procedure in a 5G network;
FIG. 4 is a schematic diagram of an event monitoring procedure in which UE moves (or is handed over) from a 5G network to a 4G network in an interworking architecture (where there is no N26 interface) between the 4G network and the 5G network;
FIG. 5 is a schematic diagram of a network architecture applicable to an embodiment of this application;
FIG. 6 is a schematic flowchart of an event management method according to an embodiment of this application;
FIG. 7 is a schematic flowchart of another event management method according to an embodiment of this application;
FIG. 8 is a schematic flowchart of still another event management method according to an embodiment of this application;
FIG. 9 is a schematic diagram of a structure of a communication apparatus according to an embodiment of this application; and
FIG. 10 is a schematic diagram of a structure of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, such as a long term evolution (long term evolution, LTE) system, an LTE frequency division duplex (frequency division duplex, FDD) system, an LTE time division duplex (time division duplex, TDD) system, a 5th generation (5th generation, 5G) system, a new radio (new radio, NR) system, or another future communication system.

To better understand the technical solutions provided in embodiments of this application, technical terms in embodiments of this application are first described.

### 1. 4G network capability exposure architecture

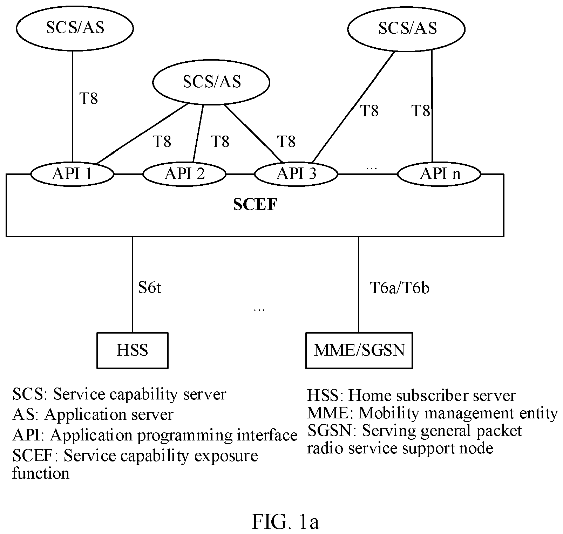

FIG. 1a is a schematic diagram of the 4G network capability exposure architecture. The architecture includes a service capability exposure network element (service capability exposure function, SCEF), a service capability server (service capability server, SCS)/application server (application server, AS), and a 4G core network element. The 4G core network element includes a home subscriber server (home subscriber server, HSS), a mobility management entity (mobility management entity, MME), and a serving general packet radio service (general packet radio service, GPRS) support node (serving GPRS support node, SGSN).

The SCEF provides a core service capability for the SCS/AS in a form of a series of application programming interfaces (application programming interfaces, APIs) (for example, API 1, API 2, API 3, ..., and API n in FIG. 1a) through a northbound interface T8, and interworks with the 4G core network element in a southbound direction to implement event monitoring. That the SCEF provides the core service capability for the SCS/AS in the form of the API through the T8 interface may be understood as follows: The SCEF presents a service capability supported by a 4G network to the SCS/AS through the API.

The SCS/AS invokes different APIs to implement event monitoring.

The HSS is configured to store subscription information of a user, perform identity authentication and authorization of the user, and provide information about a physical location of the user.

The MME/SGSN is configured to perform mobility management on UE.

The schematic diagram of the architecture shown in FIG. 1a further includes an interface between network elements. For example, T8 is an interface between the SCS/AS and the SCEF, and S6t is an interface between the SCEF and the HSS.

It should be noted that the 4G core network element shown in FIG. 1a is merely used as an example, and constitutes no limitation on this embodiment of this application. In another feasible implementation, the 4G core network element may further include another network element, for example, a policy and charging rules network element (policy and charging rules function, PCRF) and a packet flow description function (packet flow description function, PFDF). The PCRF is configured to provide a policy and charging rule for a session of the UE. An RCAF is configured to report radio access network user plane congestion information (RAN user plane congestion information, RUCI) to the PCRF, so that the PCRF makes a policy decision based on the RUCI to reduce network load.

### 2. 5G network capability exposure architecture

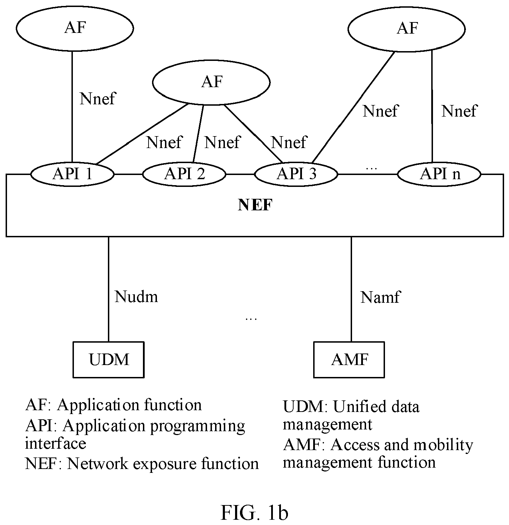

FIG. 1b is a schematic diagram of the 5G network capability exposure architecture. The architecture includes an application function (application, AF), a network exposure function (network exposure function, NEF), and a 5G core network element. The 5G core network element includes unified data management (unified data management, UDM) and an access and mobility management function (access and mobility management function, AMF).

The 5G network capability exposure architecture is consistent with the 4G network capability exposure architecture, and functions of network elements in the architectures are also consistent. A function of the AF is basically the same as that of an SCS/AS, a function of the NEF is basically the same as that of an SCEF, a function of the UDM is basically the same as that of an HSS, and a function of the AMF is basically the same as that of an MME/SGSN. Details are not described herein again.

The schematic diagram of the architecture shown in FIG. 1b further includes an interface between network elements. A 5G system is based on a service-oriented architecture, and the interface shown in FIG. 1b is a service-oriented interface. The NEF exposes a core service capability supported by a 5G network to the AF through a Nnef service interface. The UDM provides a supported service capability for the NEF through a Nudm service interface.

It should be noted that the 5G core network element shown in FIG. 1b is merely used as an example, and constitutes no limitation on this embodiment of this application. In another feasible implementation, the 5G core network element may further include another network element, for example, a policy control function (policy control function, PCF) and a session management function (session management function, SMF). A function of the PCF is basically the same as that of the PCRF. The SMF is responsible for session management, such as session establishment and deletion of the user.

### 3. Interworking architecture between a 4G network and a 5G network

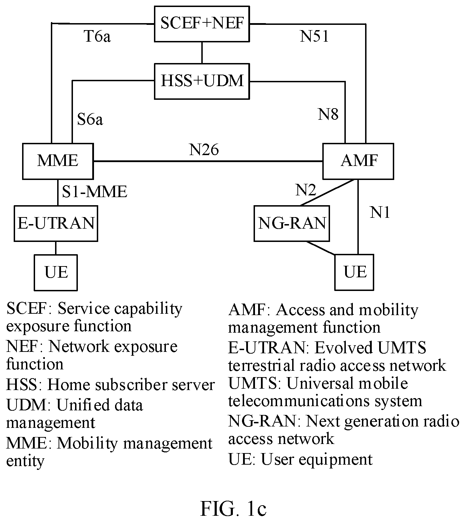

For UE that supports 4G access and 5G access, the UE may move between the 4G network and the 5G network. In an interworking (Interworking) scenario between the 4G network and the 5G network, an SCEF and an NEF are co-located (in combined setting), an HSS and UDM are co-located, and a PCRF and a PCF are co-located. FIG. 1c is a schematic diagram of the interworking architecture between the 4G network and the 5G network.

An evolved UMTS terrestrial radio access network (Evolved UMTS Terrestrial Radio Access Network, E-UTRAN) is a mobile communications radio network in a long term evolution (Long Term Evolution, LTE) network (that is, the 4G network). The E-UTRAN includes a 4G base station (eNodeB). The UMTS is a universal mobile telecommunications system (Universal Mobile Telecommunications System).

A next generation radio access network (next generation radio access network, NG-RAN) is a 5G radio access network. The NG-RAN includes a 5G base station (gNB) and a ng-eNB (next generation eNodeB). In a non-standalone networking architecture, to interconnect with a 5G core network, the 4G base station needs to be upgraded to support eLTE. The upgraded 4G base station is a ng-eNB.

An AF (not shown in FIG. 1c) may request to obtain a status of a network or UE from the SCEF+NEF, to optimize network performance, affect user behavior, and the like. After receiving the request from the AF, the SCEF+NEF may interact with a 3GPP core network element (to be specific, the HSS+UDM, an MME, an AMF, or the like) to obtain content requested by the AF. It should be noted that a third-party application interacting with the SCEF+NEF is the AF, which is merely used as an example. The third-party application may alternatively be an SCS/AS. The AF mentioned subsequently in the interworking scenario may alternatively be replaced with the SCS/AS.

It should be further noted that, compared with the 4G network, the 5G network has more network capabilities, such as slice management, edge computing, and big data analysis. This means that a network capability of a T8 interface (provided by the SCEF for the SCS/AS) is not completely the same as a network capability of a Nnef interface (provided by the NEF for the AF). In other words, an API supported by the T8 interface is not completely the same as an API supported by the Nnef interface. In an implementation, for an API supported by both the T8 interface and the Nnef interface, compared with the 4G network, the API may have more features in the 5G network. For example, both the T8 interface and the Nnef interface support an event monitoring API. However, compared with invoking the event monitoring API in the 4G network, invoking the event monitoring API in the 5G network can monitor more accurate user location information.

The schematic diagram of the architecture shown in FIG. 1c further includes an interface between network elements. For example, the UE may communicate with the AMF through an N1 interface, or may communicate with the AMF through an interface N2 of the NG-RAN. Another interface shown in FIG. 1c is not described herein.

It should be noted that an N26 interface is an interface between the MME and the AMF, and whether the N26 interface exists depends on network deployment. If the N26 interface exists, when the UE moves between the 4G network and the 5G network, a mobility management context of the UE may be transferred through the N26 interface.

It should be noted that the 3GPP core network element shown in FIG. 1c is merely used as an example, and constitutes no limitation on this embodiment of this application. In another feasible implementation, the 3GPP core network element may further include another network element, for example, a PCRF and a PCF that are co-located, an SMF and a packet data network gateway-control (packet data network gateway-control, PGW-C) that are co-located, and a user plane function (user plane function, UPF) and a PGW-user (PGW-user, PGW-U) that are co-located.

### 4. Event monitoring procedure in a 4G network

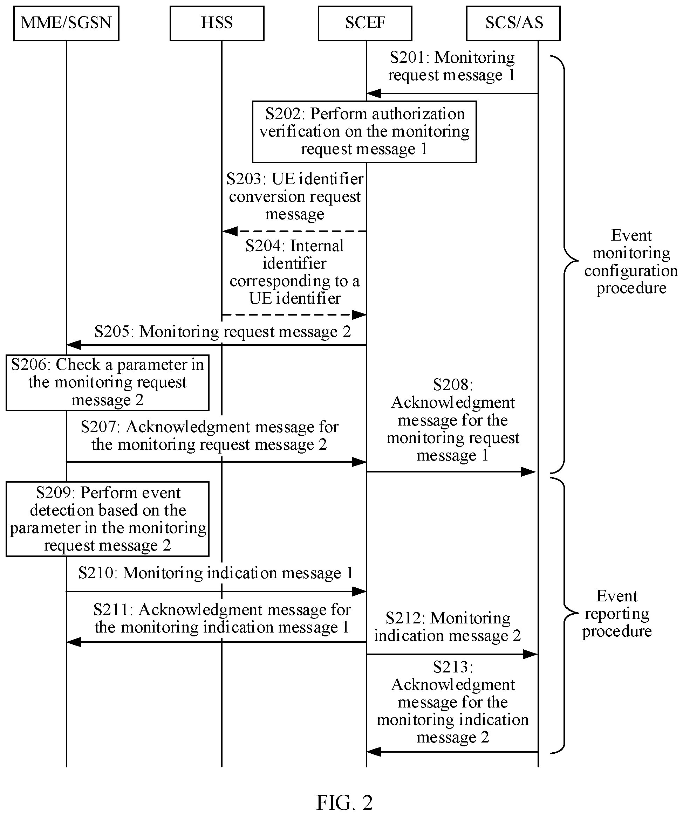

FIG. 2 is a schematic diagram of the event monitoring procedure in the 4G network. The event monitoring procedure in the 4G network includes an event monitoring configuration procedure in the 4G network and an event reporting procedure in the 4G network. The event monitoring configuration procedure in the 4G network may include but is not limited to step S201 to step S208, and the event reporting procedure in the 4G network may include but is not limited to step S209 to step S213. The following first describes the event monitoring configuration procedure in the 4G network.

Step S201: An SCS/AS sends a monitoring request message 1 to an SCEF, where the monitoring request message 1 carries an event notification address (notification destination) and a monitoring type (monitoring type).

The event notification address is a destination address corresponding to an event report. In other words, after receiving the event report from a 4G core network, the SCEF sends the event report to the address. The event notification address may be an address of the SCS/AS or an address of another device. The event notification address may be an internet protocol (internet protocol, IP) address, a media access control (media access control, MAC) address, a uniform resource identifier (uniform resource identifier, URI), or a uniform resource locator (uniform resource locator, URL).

The monitoring type indicates a type of an event that the SCS/AS requests to monitor. The monitoring type may include but is not limited to: a change of a UE location, UE reachability, and whether the UE is roaming, or in a device-card separation.

In an implementation, the monitoring request message 1 may further include but is not limited to one or more of the following parameters: a UE identifier, a geographical area (Geographic Area), a maximum quantity of reports (Maximum number of reports), monitoring duration (Monitoring Duration), or group reporting guard time (Group reporting guard time).

If the monitoring request message 1 carries the UE identifier, the UE identifier may be an external identifier, and the external identifier is for identifying the UE outside a 3GPP network. The external identifier may include an External Id, a mobile phone number, External Group Ids, or Any UE. The External Id or the mobile phone number is for identifying one UE, the External Group Ids are for identifying one or more groups of UEs, and the Any UE is for identifying all UEs. In other words, the UE identifier carried in the monitoring request message 1 may be for identifying one or more UEs. If the monitoring request message 1 carries the External Group Ids, it indicates that an event monitoring request is group event subscription. If the monitoring request message 1 does not carry the UE identifier, it may indicate that the monitoring request message 1 is for requesting to monitor all UEs in a cell.

The geographical area may be for limiting an action scope of the event that the SCS/AS requests to monitor. For example, when the monitoring request message 1 carries the geographical area, the event that the SCS/AS requests to monitor may be: obtaining a quantity of UEs in the geographical area.

The maximum quantity of reports indicates an upper limit of a quantity of reports of the event report. When the maximum quantity of reports is 1, it indicates that the event monitoring request is a one-time monitoring request. When the maximum quantity of reports is greater than 1, it indicates that the event monitoring request is a multi-time monitoring request. It should be noted that, when the UE identifier carried in the monitoring request message 1 is for identifying one or more groups of UEs, the maximum quantity of reports is applied to each group member. In other words, for each group member, a maximum quantity of reports of the group member is the maximum quantity of reports carried in the monitoring request message 1.

Before the monitoring duration (that is, before the monitoring duration expires), event monitoring subscription remains active, that is, the event needs to continue to be monitored. If current time is later than the monitoring duration (that is, the monitoring duration expires), the event monitoring subscription becomes inactive, that is the event does not need to continue to be monitored.

If the monitoring request message 1 carries the group reporting guard time, it indicates that the event monitoring request is the group event subscription. The SCEF may aggregate event reports reported by group UEs. When the group reporting guard time expires, all the aggregated event reports are sent to the event notification address.

Step S202: The SCEF performs authorization verification on the foregoing monitoring request message 1.

After receiving the monitoring request message, the SCEF may perform authorization verification on the monitoring request message 1. If the authorization verification succeeds, information carried in the monitoring request message 1 is stored.

Optionally, if the authorization verification succeeds, the SCEF may further convert the geographic area into a series of cell identifiers, eNodeB identifiers, and/or routing area identities (routing area identities, RAIs)/tracking area identities (tracking area identities, TAIs), and then find, based on the series of cell identifiers, eNodeB identifiers, and/or RAIs/TAIs obtained through conversion, all MMEs/SGSNs that serve the area. It should be noted that, in addition to finding the MME/SGSN that serves the area by using the information obtained through conversion, the MME/SGSN corresponding to the UE may alternatively be found by using a mobility management context of the UE.

If the UE identifier in the monitoring request message 1 is the external identifier, the SCEF may next perform step S203. If the UE identifier in the monitoring request message 1 is an internal identifier, the SCEF may next perform step S205.

Step S203: The SCEF sends a UE identifier conversion request message to an HSS, where the UE identifier conversion request message carries the foregoing UE identifier.

The UE identifier carried in the UE identifier conversion request message may be the External Group Ids or the External Id.

Step S204: The HSS sends an internal identifier corresponding to the foregoing UE identifier to the SCEF.

After receiving the UE identifier conversion request message, the HSS may obtain the internal identifier of the UE corresponding to the foregoing UE identifier, and send the internal identifier to the SCEF. The internal identifier (an Internal UE Id) is for identifying the UE in the 3GPP network. The internal identifier may include an international mobile subscriber identity (international mobile subscriber identity, IMSI). The UE identifier carried in the UE identifier conversion request message is the External Group Ids, and the internal identifier sent to the SCEF may be IMSI-Group Ids. The UE identifier carried in the UE identifier conversion request message is the External Id, and the internal identifier sent to the SCEF may be the Internal UE Id.

Step S205: The SCEF sends a monitoring request message 2 to the MME/SGSN, where the monitoring request message 2 carries a monitoring type.

In an implementation, the monitoring request message 2 may further carry an SCEF identifier and/or an SCEF reference Id. The SCEF identifier (SCEF ID) uniquely identifies one SCEF. Each monitoring request message (for example, the monitoring request message 2) sent by the SCEF may carry one or more monitoring types, and one monitoring type may correspond to one SCEF reference Id. Different monitoring types carried in the monitoring request message (for example, the monitoring request message 2) sent by the SCEF correspond to different SCEF reference Ids. The SCEF reference Id is carried in the monitoring request message 2 and sent to the MME/SGSN, so that the SCEF can learn of, based on the carried SCEF reference Id when the MME/SGSN subsequently sends a message related to a monitoring type to the SCEF, a specific monitoring type for which the message is sent.

In an implementation, the monitoring request message 2 may further carry other parameters carried in the monitoring request message 1, for example, the geographic area, the maximum quantity of reports, the monitoring duration, and the group reporting guard time. If the monitoring request message 1 carries the external identifier, the monitoring request message 2 may further carry an internal identifier corresponding to the external identifier. If the monitoring request message 1 carries the geographic area, the monitoring request message 2 may further carry a series of cell identifiers, eNodeB identifiers, and/or RAIs/TAIs obtained by converting the geographic area.

Step S206: The MME/SGSN checks the parameter in the monitoring request message 2.

After the check is passed, the MME/SGSN may store the parameter in the monitoring request message 2. Optionally, the MME/SGSN may further set a remaining quantity of reports based on the maximum quantity of reports. Optionally, for the one-time monitoring request, the MME/SGSN may set the remaining quantity of reports to 1. The remaining quantity of reports indicates a quantity of times that the MME/SGSN further needs to send the event report to the SCEF.

Step S207: The MME/SGSN sends an acknowledgment message for the monitoring request message 2 to the SCEF.

After the parameter in the monitoring request message 2 passes the check, the MME/SGSN may return the acknowledgment message to the SCEF to notify the SCEF that the MME/SGSN has successfully received the monitoring request message 2.

Step S208: The SCEF sends an acknowledgment message for the monitoring request message 1 to the SCS/AS, where the acknowledgment message carries a receiving indication.

The receiving indication indicates that the SCEF has successfully received the monitoring request message 1.

**The following describes the event reporting procedure in the 4G network.**

Step S209: The MME/SGSN performs event detection based on the parameter in the monitoring request message 2.

It should be noted that, after the parameter in the monitoring request message 2 passes the check, the MME/SGSN may perform event detection based on the parameter in the monitoring request message 2. An execution sequence of step S207 and step S209 is not limited in this embodiment of this application. Step S207 may be performed first, step S209 may be performed first, or step S207 and step S209 are performed simultaneously.

Step S210: The MME/SGSN sends a monitoring indication message 1 to the SCEF, where the monitoring indication message 1 carries a monitoring event report.

The monitoring event report is generated when the event is detected. If the event monitoring request is the one-time monitoring request, the MME/SGSN deletes a corresponding monitoring event configuration locally after sending the monitoring event report once, that is, deletes a stored parameter in a corresponding monitoring event message. If the event monitoring request is the multi-time monitoring request, the MME/SGSN decreases the remaining quantity of reports by 1 after sending the monitoring event report once. When the remaining quantity of reports is 0 or the monitoring duration expires, the MME/SGSN deletes a corresponding monitoring event configuration locally.

In an implementation, the monitoring indication message 1 may further carry an SCEF identifier and/or an SCEF reference Id. The MME/SGSN carries the SCEF reference Id in the monitoring indication message 1, so that the SCEF can learn of a specific monitoring type for which the monitoring indication message 1 is sent.

Step S211: The SCEF sends an acknowledgment message for the monitoring indication message 1 to the MME/SGSN.

After receiving the monitoring indication message 1, the SCEF returns the acknowledgment message to the MME/SGSN to notify the MME/SGSN that the SCEF has successfully received the monitoring indication message 1.

Step S212: The SCEF sends a monitoring indication message 2 to the foregoing event notification address, where the monitoring indication message 2 carries a monitoring event report.

The event notification address is the event notification address carried in the foregoing monitoring request message 1. The monitoring event report carried in the monitoring indication message 2 includes monitoring event reports that are received and aggregated from one or more MMEs/SGSNs. If the monitoring request message 1 carries the group reporting guard time, when the group reporting guard time expires, the SCEF sends the monitoring indication message 2 to the event notification address.

It should be noted that sending information to the event notification address in this embodiment of this application is sending the information to a device whose address is the event notification address. Similarly, that the event notification address sends information to a device in this embodiment of this application is that a device whose address is the event notification address sends the information to the device.

Step S213: The event notification address sends an acknowledgment message for the monitoring indication message 2 to the SCEF.

After receiving the monitoring indication message 2, the event notification address returns the acknowledgment message to the SCEF to notify the SCEF that the event notification address has successfully received the monitoring indication message 2.

### 5. Event monitoring procedure in a 5G network

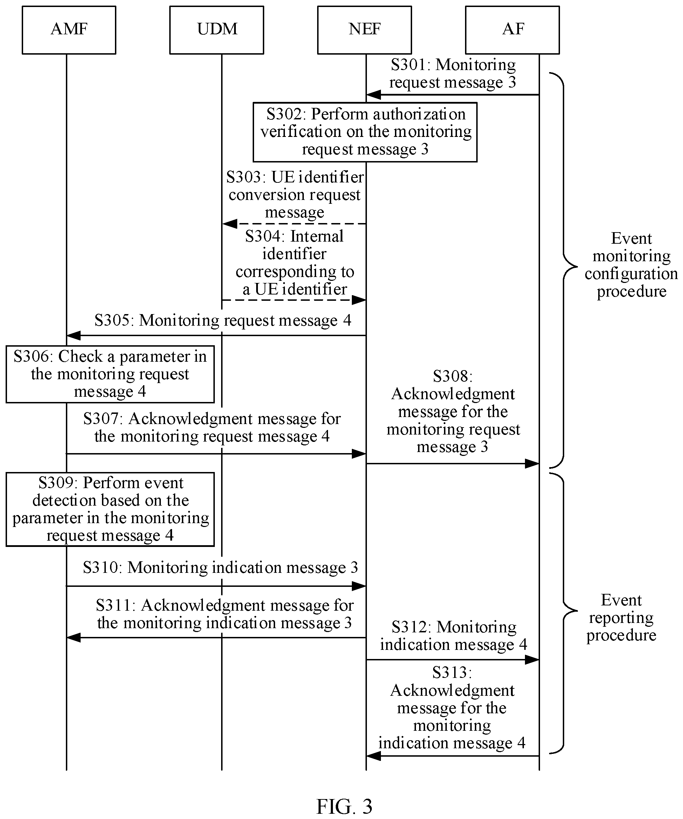

FIG. 3 is a schematic diagram of the event monitoring procedure in the 5G network. The event monitoring procedure in the 5G network includes an event monitoring configuration procedure in the 5G network and an event reporting procedure in the 5G network. The event monitoring configuration procedure in the 5G network may include but is not limited to step S301 to step S308, and the event reporting procedure in the 5G network may include but is not limited to step S309 to step S313. The following first describes the event monitoring configuration procedure in the 5G network.

It should be noted that the event monitoring procedure in the 5G network is basically the same as the event monitoring procedure in the 4G network. For an execution process of step S301 to step S308, refer to specific descriptions of step S201 to step S208 in FIG. 2. For an execution process of step S309 to step S313, refer to specific descriptions of step S209 to step S213 in FIG. 2. Details are not described herein again. It should be further noted that, in the event monitoring procedure in the 5G network, for a step performed by an AF, refer to specific descriptions of the step performed by the SCS/AS in FIG. 2. For a step performed by an NEF, refer to specific descriptions of the step performed by the SCEF in FIG. 2. For a step performed by UDM, refer to specific descriptions of the step performed by the HSS in FIG. 2. For a step performed by an AMF, refer to specific descriptions of the step performed by the MME/SGSN in FIG. 2.

Step S301: The AF sends a monitoring request message 3 to the NEF, where the monitoring request message 3 carries an event notification address and a monitoring type.

The monitoring request message 3 may be a Nnef_EventExposure_Subscribe request message. In an implementation, the monitoring request message 3 may further include but is not limited to one or more of the following parameters: a UE identifier, a geographical area, a maximum quantity of reports, monitoring duration, or group reporting guard time. It should be noted that for the parameter carried in the monitoring request message 3, refer to specific descriptions of the parameter carried in the monitoring request message 1 in FIG. 2. Details are not described herein again.

In an implementation, the monitoring request message 3 may further indicate an event reporting manner, and the event reporting manner is one-time reporting, continuous reporting, or periodic reporting. When the monitoring request message 3 carries periodic time, the event reporting manner indicated by the monitoring request message 3 may be the periodic reporting. When the monitoring request message 3 carries the periodic time and the maximum quantity of reports, the event reporting manner indicated by the monitoring request message 3 may be the continuous reporting.

Step S302: The NEF performs authorization verification on the foregoing monitoring request message 3.

Optionally, if the authorization verification succeeds, the NEF may further convert the geographic area into a series of cell identifiers, eNodeB identifiers (or gNB identifiers), and/or RAIs/TAIs, and then find, based on information obtained through conversion, all AMFs that serve the area.

If the UE identifier in the monitoring request message 3 is an external identifier, the NEF may next perform step S303. If the UE identifier in the monitoring request message 3 is an internal identifier, the NEF may next perform step S305.

Step S303: The NEF sends a UE identifier conversion request message to the UDM, where the UE identifier conversion request message carries the foregoing UE identifier.

The UE identifier carried in the UE identifier conversion request message may be External Group Ids or an External Id.

Step S304: The UDM sends an internal identifier corresponding to the foregoing UE identifier to the NEF.

After receiving the UE identifier conversion request message, the UDM may obtain the internal identifier of the UE corresponding to the foregoing UE identifier, and send the internal identifier to the NEF.

Step S305: The NEF sends a monitoring request message 4 to the AMF, where the monitoring request message 4 carries a monitoring type.

The monitoring request message 4 may be a Namf_EventExposure_Subscribe request message. In an implementation, the monitoring request message 4 may further carry other parameters carried in the monitoring request message 3, for example, the geographic area, the maximum quantity of reports, the monitoring duration, and the group reporting guard time. If the monitoring request message 3 carries the external identifier, the monitoring request message 4 may further carry an internal identifier corresponding to the external identifier. If the monitoring request message 3 carries the geographic area, the monitoring request message 4 may further carry a series of cell identifiers, eNodeB identifiers (or gNB identifies), and/or RAIs/TAIs obtained by converting the geographic area.

In an implementation, the monitoring request message 4 may further carry a reference Id and an NEF identifier. The NEF identifier uniquely identifies one NEF. Each monitoring request message (for example, the monitoring request message 4) sent by the NEF may carry one or more monitoring types, and one monitoring type may correspond to one reference Id. Different monitoring types carried in the monitoring request message (for example, the monitoring request message 4) sent by the NEF correspond to different reference Ids. The reference Id is carried in the monitoring request message 4 and sent to the AMF, so that the NEF can learn of, based on the carried reference Id when the AMF subsequently sends a message related to a monitoring type to the NEF, a specific monitoring type for which the message is sent.

Step S306: The AMF checks the parameter in the monitoring request message 4.

After the check is passed, the AMF may store the parameter in the monitoring request message 4.

Step S307: The AMF sends an acknowledgment message for the monitoring request message 4 to the NEF.

After the parameter in the monitoring request message 4 passes the check, the AMF may return the acknowledgment message to the NEF to notify the NEF that the AMF has successfully received the monitoring request message 4.

Step S308: The NEF sends an acknowledgment message for the monitoring request message 3 to the AF, where the acknowledgment message carries a receiving indication.

The receiving indication indicates that the NEF has successfully received the monitoring request message 3.

**The following describes the event reporting procedure in the 5G network.**

Step S309: The AMF performs event detection based on the parameter in the monitoring request message 4.

An execution sequence of step S307 and step S309 is not limited in this embodiment of this application. Step S307 may be performed first, step S309 may be performed first, or step S307 and step S309 are performed simultaneously.

Step S310: The AMF sends a monitoring indication message 3 to the NEF, where the monitoring indication message 3 carries a monitoring event report.

The monitoring event report is generated when an event is detected. If the event reporting manner is the one-time reporting, the AMF deletes a corresponding monitoring event configuration locally after sending the monitoring event report once, that is, deletes a stored parameter in a corresponding monitoring event message. If the event reporting manner is the continuous reporting, the AMF decreases a remaining quantity of reports by 1 after sending the monitoring event report once. When the remaining quantity of reports is 0 or the monitoring duration expires, the AMF deletes a corresponding monitoring event configuration locally.

In an implementation, the monitoring indication message 3 may further carry an NEF identifier and/or a reference Id. The AMF carries the reference Id in the monitoring indication message 3, so that the NEF can learn of a specific monitoring type for which the monitoring indication message 3 is sent.

Step S311: The NEF sends an acknowledgment message for the monitoring indication message 3 to the AMF.

After receiving the monitoring indication message 3, the NEF returns the acknowledgment message to the AMF to notify the AMF that the NEF has successfully received the monitoring indication message 3.

Step S312: The NEF sends a monitoring indication message 4 to the foregoing event notification address, where the monitoring indication message 4 carries a monitoring event report.

The event notification address is the event notification address carried in the foregoing monitoring request message 3. The monitoring event report carried in the monitoring indication message 4 includes monitoring event reports that are received and aggregated from one or more AMFs. If the monitoring request message 3 carries the group reporting guard time, when the group reporting guard time expires, the NEF sends the monitoring indication message 4 to the event notification address.

Step S313: The event notification address sends an acknowledgment message for the monitoring indication message 4 to the NEF.

After receiving the monitoring indication message 4, the event notification address returns the acknowledgment message to the NEF to notify the NEF that the event notification address has successfully received the monitoring indication message 4.

### 6. Event monitoring procedure in which UE moves from a 5G network to a 4G network in an interworking architecture (there is no N26 interface) between the 4G network and the 5G network

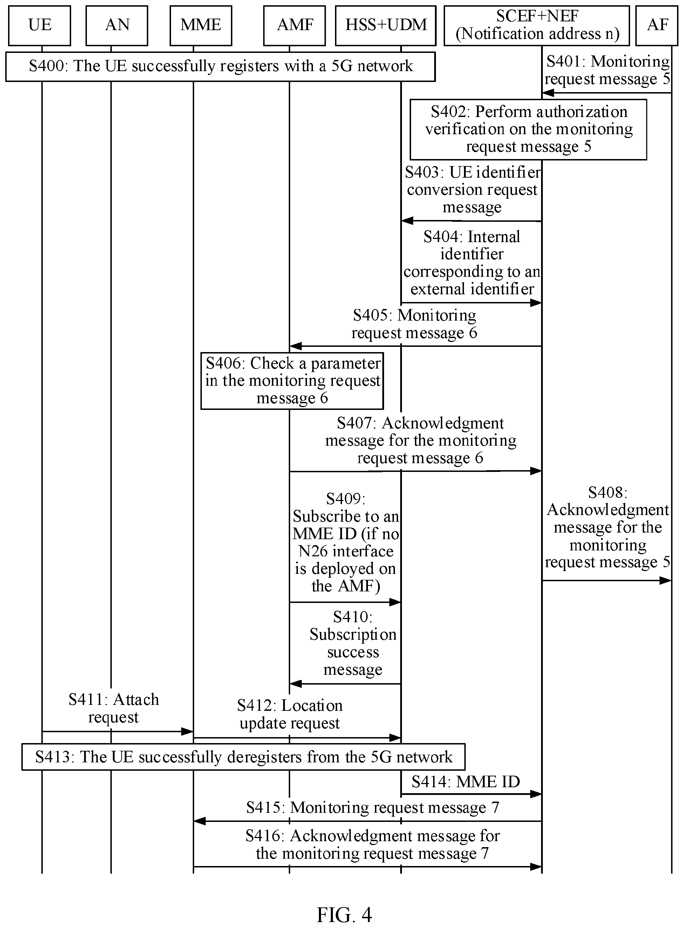

FIG. 4 is a schematic diagram of the event monitoring procedure in which the UE moves (or is handed over) from the 5G network to the 4G network in the interworking architecture (there is no N26 interface) between the 4G network and the 5G network.

Step S400: The UE successfully registers with the 5G network.

Step S401: An AF sends a monitoring request message 5 to an SCEF+NEF, where the monitoring request message 5 carries an event notification address, a monitoring type, and an external identifier of the UE.

In an implementation, the monitoring request message 5 may further include but is not limited to one or more of the following parameters: an event reporting manner, a geographical area, a maximum quantity of reports, monitoring duration, or group reporting guard time. It should be noted that for the parameter carried in the monitoring request message 5, refer to specific descriptions of the parameter carried in the monitoring request message 3 in FIG. 3. Details are not described herein again. When an event occurs, the SCEF+NEF may notify the event to the event notification address carried in the monitoring request message 5. Optionally, the event notification address may be an address of the AF or an address of another device.

In an implementation, the monitoring request message 5 may further carry a first event notification correlation identifier (Notification correlation Id), and the first event notification correlation identifier is assigned by the AF. Each monitoring request message (for example, the monitoring request message 5) sent by the AF corresponds to one first event notification correlation identifier, and different monitoring request messages sent by the AF correspond to different first event notification correlation identifiers. One AF may send the monitoring request message to a plurality of SCEF+NEFs, and one SCEF+NEF may receive the monitoring request messages from a plurality of AFs. The first event notification correlation identifier is carried in the monitoring request message 5 and sent to the SCEF+NEF, so that the AF can learn of, based on the first event notification correlation identifier when the SCEF+NEF subsequently sends a message related to the monitoring request message 5 to the AF, a specific monitoring request message for which the message is sent.

Step S402: The SCEF+NEF performs authorization verification on the monitoring request message 5.

Step S403: The SCEF+NEF sends a UE identifier conversion request message to an HSS+UDM, where the UE identifier conversion request message carries the foregoing external identifier.

Step S404: The HSS+UDM sends an internal identifier corresponding to the external identifier to the SCEF+NEF.

Step S405: The SCEF+NEF sends a monitoring request message 6 to an AMF, where the monitoring request message 6 carries a monitoring type, a second event notification correlation identifier, and the internal identifier.

Each monitoring request message (for example, the monitoring request message 6) sent by the SCEF+NEF corresponds to one second event notification correlation identifier, and different monitoring request messages sent by the SCEF+NEF correspond to different second event notification correlation identifiers. One SCEF+NEF may send the monitoring request message to a plurality of AMFs, and one AMF may receive the monitoring request messages from a plurality of SCEF+NEFs. The second event notification correlation identifier is carried in the monitoring request message 6 and sent to the AMF, so that the SCEF+NEF can identify, based on the second event notification correlation identifier when the AMF subsequently sends a message (for example, reporting an event) related to the monitoring request message 6 to the SCEF+NEF, a specific monitoring request message for which the message is sent. It should be noted that if the monitoring request message 5 carries the first event notification address, the first event notification address is different from the second event notification correlation identifier carried in the monitoring request message 6, and the second event notification correlation identifier is assigned by the SCEF+NEF.

In an implementation, the monitoring request message 6 may further carry an event notification address of the SCEF+NEF. It should be noted that the event notification address carried in the monitoring request message 6 is different from the event notification address carried in the monitoring request message 5. When the event occurs, the AMF may notify the event to the event notification address carried in the monitoring request message 5, and the SCEF+NEF may notify the event to the event notification address carried in the monitoring request message 5. The event notification address carried in the monitoring request message 6 is an address of the SCEF+NEF.

Optionally, the monitoring request message 6 may further carry other parameters carried in the monitoring request message 5, for example, a maximum quantity of reports and monitoring duration.

Step S406: The AMF checks the parameter in the monitoring request message 6.

Step S407: The AMF sends an acknowledgment message for the monitoring request message 6 to the SCEF+NEF.

In this embodiment of this application, after receiving the monitoring request message 6, the AMF may check the parameter in the monitoring request message 6. After the check is passed, the AMF may return the acknowledgment message to the SCEF+NEF to notify the SCEF+NEF that the AMF has successfully received the monitoring request message 6.

Optionally, after the check is passed, the AMF may further perform event detection based on the parameter in the monitoring request message 6. Further, after an event is detected, refer to the event reporting procedure in the 5G network described in step S309 to step S313 in FIG. 3, to send a monitoring event report to the SCEF+NEF.

Step S408: The SCEF+NEF sends an acknowledgment message for the monitoring request message 5 to the AF, where the acknowledgment message carries a receiving indication and a monitoring subscription identifier.

The receiving indication indicates that the SCEF+NEF has successfully received the monitoring request message 5. After receiving the monitoring request message 5, the SCEF+NEF may assign a monitoring subscription identifier (Subscription Id) to the AF, and the acknowledgment message for the monitoring request message 5 carries the monitoring subscription identifier. When the SCEF+NEF subsequently sends a message related to the monitoring request message 5 to the AF, the monitoring subscription identifier may be carried, so that the AF may learn of a specific monitoring request message for which the message is sent.

It should be noted that for an execution process of step S401 to step S408, refer to specific descriptions of step S301 to step S308 in FIG. 3. Details are not described herein again. It should be further noted that for the parameter carried in the monitoring request message 5, refer to specific descriptions of the parameter carried in the monitoring request message 3 in FIG. 3. For the parameter carried in the monitoring request message 6, refer to specific descriptions of the parameter carried in the monitoring request message 4 in FIG. 3. Details are not described herein again.

Step S409: If no N26 interface is deployed on the AMF, the AMF subscribes to an MME ID from the HSS+UDM, and carries a notification address n.

The MME ID uniquely identifies an MME. The AMF subscribes to the MME ID from the HSS+UDM and carries the notification address n to indicate the HSS+UDM to send the MME ID to the notification address n when the UE registers with the MME. The MME identified by the MME ID is an MME to which the UE accesses after moving from the 5G network to the 4G network. The notification address n may be an address of the SCEF+NEF or another address. In FIG. 4, an example in which the notification address n is the address of the SCEF+NEF is used for description. This does not constitute a limitation on this embodiment of this application. It should be noted that when the AMF subscribes to the MME ID from the HSS+UDM, the UE may have successfully moved from the 5G network to the 4G network, or may not have successfully moved from the 5G network to the 4G network. This is not limited in this embodiment of this application.

Step S410: The HSS+UDM sends a subscription success message to the AMF.

Step S411: The UE moves from 5G to 4G, and the UE initiates an attach request to the MME, to request to access the 4G network.

Step S412: The MME sends a location update request to the HSS+UDM, where the location update request indicates the HSS+UDM to trigger Nudm_UECM_DeregistrationNotification to the AMF.

The HSS+UDM triggers Nudm_UECM_DeregistrationNotification to the AMF, to indicate the AMF to delete a mobility management context of the UE.

Step S413: The UE successfully deregisters from the 5G network.

Optionally, deregistration from the 5G network may be actively initiated by the UE, or may be initiated by a network side. For example, the HSS+UDM initiates deregistration.

Step S414: The HSS+UDM sends the MME ID to the notification address n.

The MME ID is for identifying the MME to which the UE accesses after moving to the 4G network. After receiving the MME ID, the SCEF+NEF may return a response to the HSS+UDM, to indicate that the MME ID is successfully received.

Step S415: The SCEF+NEF sends a monitoring request message 7 to the MME indicated by the MME ID, where the monitoring request message 7 carries a monitoring type, an event notification address of the SCEF+NEF, and an internal identifier of the UE.

The event notification address of the SCEF+NEF, the monitoring type, and the internal identifier of the UE that are carried in the monitoring request message 7 are respectively the same as the event notification address, the monitoring type, and the internal identifier of the UE that are carried in the monitoring request message 6. For specific descriptions, refer to content in step S405.

Step S416: The MME sends an acknowledgment message for the monitoring request message 7 to the SCEF+NEF.

The MME returns the acknowledgment message to the SCEF+NEF to notify the SCEF+NEF that the MME has successfully received the monitoring request message 7. After receiving the monitoring request message 7, the MME may check a parameter in the monitoring request message 7. After the check is passed, the MME may further perform event detection based on the parameter in the monitoring request message 7. Further, after an event is detected, refer to the event reporting procedure in the 4G network described in step S209 to step S213 in FIG. 2, to send a monitoring event report to the SCEF+NEF.

That the UE moves from the 5G network to the 4G network means that the UE deregisters from the 5G network. As a result, event monitoring cannot continue to be performed on the UE by using the AMF. In addition, in the event monitoring procedure described in FIG. 4, the HSS+UDM sends only the MME ID subscribed by the AMF to the SCEF+NEF. The SCEF+NEF may not be able to address the MME based only on the MME ID, and therefore cannot continue to perform event monitoring on the UE by using the MME.

Similarly, that the UE moves from the 4G network to the 5G network means that the UE deregisters from the 4G network. As a result, event monitoring cannot continue to be performed on the UE by using the MME. In addition, in the interworking architecture in which no N26 interface is deployed, an existing standard does not support a change of a monitoring request when the UE moves from the 4G network to the 5G network. To be specific, when the UE moves from the 4G network to the 5G network, event monitoring cannot continue to be performed on the UE by using the AMF or the MME.

In view of this, an embodiment of this application provides an event management method, to help a network exposure network element successfully address a second mobility management network element, and then help continue to perform event monitoring on UE by using the second mobility management network element.

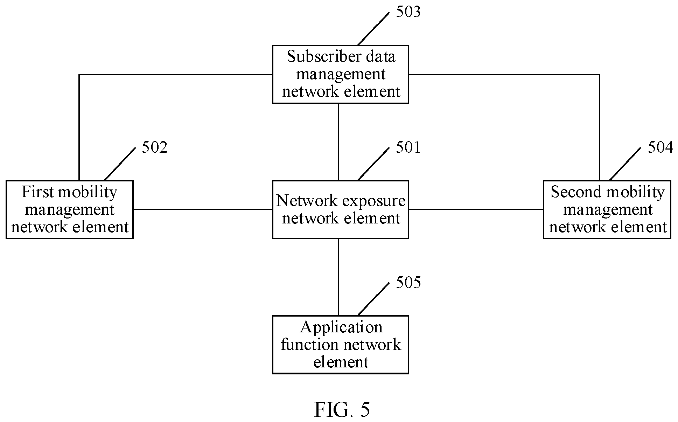

FIG. 5 is a schematic diagram of a network architecture applicable to an embodiment of this application. FIG. 5 includes a network exposure network element 501, a first mobility management network element 502, a subscriber data management network element 503, and a second mobility management network element 504.

The first mobility management network element 502 is a mobility management network element that serves UE in a first communication system, and the second mobility management network element 504 is a mobility management network element that serves the UE in a second communication system. The first communication system is a communication system that serves the UE before a communication system that serves the UE changes, and the second communication system is a communication system that serves the UE after the communication system that serves the UE changes. In this embodiment of this application, a reason why the communication system that serves the UE changes may include but is not limited to: The UE moves from the first communication system to the second communication system, or the UE is handed over from the first communication system to the second communication system. In an implementation, when a physical location of the UE moves, or when the UE actively initiates a handover, the UE may move (or is handed over) from the first communication system to the second communication system.

The first communication system may be the following communication system: a 4G communication system, a 4.5G communication system, a 5G communication system, a system integrating a plurality of communication systems, or a future evolved communication system. Similarly, the second communication system may be the following communication system: a 4G communication system, a 4.5G communication system, a 5G communication system, a system integrating a plurality of communication systems, or a future evolved communication system. In this embodiment of this application, the first communication system is different from the second communication system. For example, the first communication system is a 5G communication system, and the second communication system is a 4G communication system.

The UE in this embodiment of this application may be a device with a wireless transceiver function, and may be deployed on land, including an indoor or outdoor device, or a handheld or vehicle-mounted device, may be deployed on a water surface (for example, on a ship), or may be deployed in the air (for example, on an airplane, a balloon, or an artificial satellite). The UE includes a handheld device, a vehicle-mounted device, a wearable device, or a computing device that has a wireless communication function. For example, the UE may be a mobile phone (mobile phone), a tablet computer, or a computer with a wireless transceiver function. The terminal device may alternatively be a virtual reality (virtual reality, VR) terminal device, an augmented reality (augmented reality, AR) terminal device, a smart vehicle (smart vehicle) terminal device, a wireless terminal in industrial control, a wireless terminal in self-driving, an unmanned aerial vehicle, an unmanned aerial vehicle controller, a wireless terminal in telemedicine, a wireless terminal in a smart grid, a wireless terminal in a smart city (smart city), a wireless terminal in a smart home (smart home), or the like. A specific technology and a specific device form used by the UE are not limited in this embodiment of this application.

Optionally, the network architecture shown in FIG. 5 may further include an application function network element 505, configured to invoke different APIs to implement event monitoring.

In this embodiment of this application, the first mobility management network element 502 may be the AMF in FIG. 1c, and the second mobility management network element 504 may be the MME in FIG. 1c. Alternatively, the first mobility management network element 502 may be the MME, and the second mobility management network element 504 may be the AMF. The network exposure network element 501 may be the SCEF+NEF in FIG. 1c, and the subscriber data management network element 503 may be the HSS+UDM in FIG. 1c. It should be noted that names of the network exposure network element 501, the first mobility management network element 502, the subscriber data management network element 503, and the second mobility management network element 504 are used as examples, and do not constitute a limitation on this embodiment of this application.

The first mobility management network element 502 is configured to send first request information to the subscriber data management network element 503, where the first request information includes an identifier of the UE and an event notification address of the network exposure network element 501, and the first request information is for requesting the subscriber data management network element 503 to send identification information and address information of the second mobility management network element 504 to the event notification address.

The subscriber data management network element 503 is configured to receive the first request information and receive the identification information and the address information of the second mobility management network element 504 from the second mobility management network element 504. If the UE is in a single-registration mode, the subscriber data management network element 503 is further configured to send first information to the foregoing event notification address, where the first information includes the identification information and the address information of the second mobility management network element 504.

The network exposure network element 501 is configured to receive the first information and send first event monitoring request information to the second mobility management network element 504 based on the identification information and the address information of the second mobility management network element 504, where the first event monitoring request information includes the foregoing identifier of the UE and the foregoing event notification address, and the first event monitoring request information indicates the second mobility management network element 504 to monitor a first event of the UE. The technical solutions described in this embodiment of this application may be applied to a procedure in which the UE moves (or is handed over) from the first communication system to the second communication system.

In this manner, the network exposure network element 501 may successfully address the second mobility management network element 504 by using the identification information and the address information of the second mobility management network element 504, and may further send the first event monitoring request information to the second mobility management network element 504. Therefore, event monitoring may continue to be performed on the UE by using the second mobility management network element 504.

The technical solutions described in embodiments of this application may be applied to various communication systems, for example, a 4G communication system, a 4.5G communication system, a 5G communication system, a system integrating a plurality of communication systems, or a future evolved communication system.

It may be understood that the communication system described in embodiments of this application is intended to describe the technical solutions in embodiments of this application more clearly, and does not constitute a limitation on the technical solutions provided in embodiments of this application. A person skilled in the art may learn that with evolution of a system architecture and emergence of a new service scenario, the technical solutions provided in embodiments of this application are also applicable to a similar technical problem.

The following specifically describes the event management method provided in embodiments of this application. It should be noted that names of messages between network elements, names of parameters in the messages, or the like in the following embodiments of this application are merely examples, and there may be other names during specific implementation. This is not specifically limited in embodiments of this application. It should be further noted that in the accompanying drawings in embodiments of this application, steps and a sequence of the steps shown in embodiments are used as examples, and do not constitute a limitation on embodiments of this application. It should be understood that performing some steps in the figure or adjusting the sequence of the steps for specific implementation shall fall within the protection scope of this application.

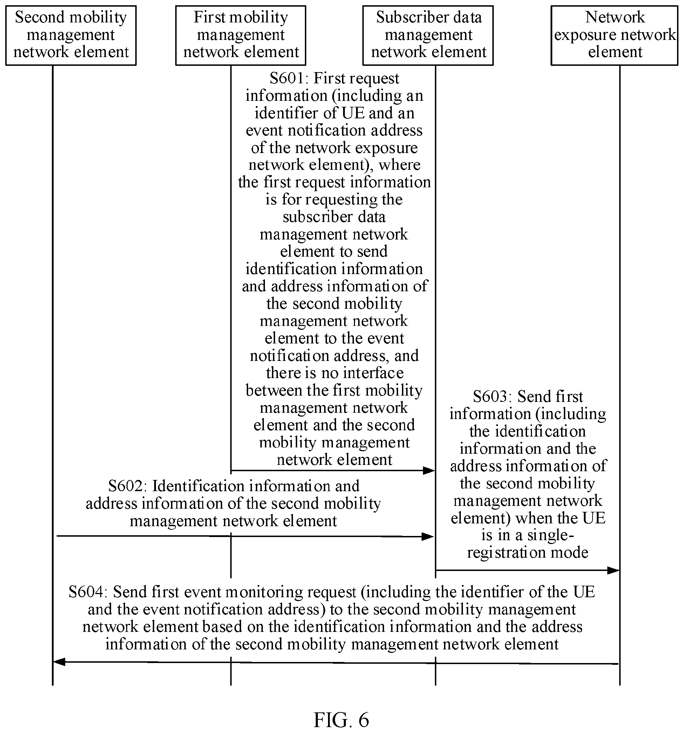

FIG. 6 is a schematic flowchart of an event management method according to an embodiment of this application. The following uses an example in which the event management method is performed by a network exposure network element, a first mobility management network element, a subscriber data management network element, and a second mobility management network element for description. The method may include but is not limited to the following steps.

Step S601: The first mobility management network element sends first request information to the subscriber data management network element, where the first request information includes an identifier of UE and an event notification address of the network exposure network element, the first request information is for requesting the subscriber data management network element to send identification information and address information of the second mobility management network element to the event notification address, there is no interface between the first mobility management network element and the second mobility management network element, the first mobility management network element is a mobility management network element that serves the UE in a first communication system, and the second mobility management network element is a mobility management network element that serves the UE in a second communication system.

The first request information may be Nudm EventExposure Subscribe request information. If there is no interface between the first mobility management network element and the second mobility management network element, the first mobility management network element may send the first request information to the subscriber data management network element. That there is no interface between the first mobility management network element and the second mobility management network element indicates that information cannot be directly transmitted between the first mobility management network element and the second mobility management network element. The first mobility management network element sends the first request information to the subscriber data management network element, to request the subscriber data management network element to send information (to be specific, the identification information and the address information of the second mobility management network element) for addressing the second mobility management network element to the event notification address (in other words, the network exposure network element). Further, the network exposure network element may successfully address the second mobility management network element based on the identification information and the address information of the second mobility management network element, and may continue to perform event monitoring on the UE by using the second mobility management network element. The identification information of the second mobility management network element uniquely identifies the second mobility management network element.

The identifier of the UE may be an internal identifier of the UE, and the event notification address of the network exposure network element is an address of the network exposure network element. It may be understood that if information is sent to the event notification address of the network exposure network element, it means that the information is sent to the network exposure network element.

In an implementation, the network exposure network element may send second event monitoring request information to the first mobility management network element, where the second event monitoring request information includes the identifier of the UE and the event notification address of the network exposure network element, and the second event monitoring request information indicates the first mobility management network element to monitor a second event of the UE. After the first mobility management network element receives the second event monitoring request information, if there is no interface between the first mobility management network element and the second mobility management network element, the first mobility management network element may send the first request information to the subscriber data management network element. After receiving the second event monitoring request information, if the second event is detected, the first mobility management network element may send information (for example, an event report) related to the second event to the event notification address. The event report may also be referred to as a monitoring event report.

Optionally, the network exposure network element may have a plurality of addresses. Optionally, the network exposure network element may indicate different mobility management network elements to monitor different events, and information related to the different events may correspond to different addresses of the network exposure network element. For example, the addresses of the network exposure network element include an address 1 and an address 2, event monitoring request information 1 sent by the network exposure network element to a mobility management network element 1 includes the address 1, and the event monitoring request information 1 indicates the mobility management network element 1 to monitor an event 1. Event monitoring request information 2 sent by the network exposure network element to a mobility management network element 2 includes the address 2, and the event monitoring request information 2 indicates the mobility management network element 2 to monitor an event 2. In this case, the mobility management network element 1 may send information related to the event 1 to the address 1, and the mobility management network element 2 may send information related to the event 2 to the address 2. In this manner, it may be convenient for the network exposure network element to distinguish between information related to different events.

The address information mentioned in this embodiment of this application may be an IP address, a media access control (media access control, MAC) address, a uniform resource identifier (uniform resource identifier, URI), a uniform resource locator (uniform resource locator, URL), or other information that can be used for addressing.

Optionally, when the first mobility management network element is an AMF and the second mobility management network element is an MME, or when the first mobility management network element is an MME and the second mobility management network element is an AMF, that there is no interface between the first mobility management network element and the second mobility management network element indicates that there is no N26 interface.

Step S602: The subscriber data management network element receives the identification information and the address information of the second mobility management network element from the second mobility management network element.

In this embodiment of this application, after receiving an attach request from the UE, the second mobility management network element may send the identification information and the address information of the second mobility management network element to the subscriber data management network element. In other words, when the UE moves (or is handed over) from the first communication system to the second communication system, the second mobility management network element may notify the subscriber data management network element of identification information and address information of a mobility management network element (that is, the second mobility management network element) that serves the UE in the second communication system.

After receiving the identification information and the address information of the second mobility management network element, the subscriber data management network element may send the identification information and the address information of the second mobility management network element to the foregoing event notification address (of the network exposure network element), so that the network exposure network element continues to perform event monitoring on the UE by using the second mobility management network element.

It should be noted that step S601 and step S602 are performed in any sequence, and may be performed simultaneously or sequentially. In other words, a sequence in which the subscriber data management network element receives the first request information and receives the identification information and the address information of the second mobility management network element is not limited in this embodiment of this application.

Step S603: The subscriber data management network element sends first information to the foregoing event notification address when the foregoing UE is in a single-registration mode, where the first information includes the identification information and the address information of the second mobility management network element.

The first information may be included in a Nudm _EventExposure_Notify message. That the UE is in the single-registration mode may indicate that the UE can camp on only one communication system. For example, for UE that supports 4G access and 5G access, the UE can camp on only a 4G network or a 5G network at the same time, but cannot camp on both the 4G network and the 5G network.

In this embodiment of this application, if the UE is in the single-registration mode, and the network exposure network element has indicated to monitor an event related to the UE, when the event is detected, a mobility management network element that serves the UE in a communication system (for example, the first communication system) on which the UE currently camps feeds back information related to the event to the network exposure network element. If the UE moves (or is handed over) to another communication system (for example, the second communication system), the mobility management network element that serves the UE also changes. If a mobility management network element that serves the UE in the second communication system cannot be found, event monitoring cannot continue to be performed on the UE.

In this embodiment of this application, when the UE is in the single-registration mode, after receiving the first request information and the identification information and the address information of the second mobility management network element, the subscriber data management network element sends the first information to the event notification address (of the network exposure network element) included in the first request information to notify the network exposure network element of the identification information and the address information of the second mobility management network element. Therefore, the network exposure network element may successfully address the second mobility management network element, and then may continue to perform event monitoring on the UE by using the second mobility management network element.

When the second mobility management network element is an MME, the identification information and the address information that are of the second mobility management network element and that are notified to the network exposure network element are target MME parameters. After receiving the identification information and the address information (that is, the target MME parameters) of the second mobility management network element, the network exposure network element may learn that a communication system that serves the UE changes, and the changed communication system (that is, the second communication system) is a 4G communication system. Further, the network exposure network element may send first event monitoring request information to the MME, to continue to perform event monitoring on the UE. Similarly, when the second mobility management network element is an AMF, the identification information and the address information that are of the second mobility management network element and that are notified to the network exposure network element are target AMF parameters. After receiving the identification information and the address information (that is, the target AMF parameters) of the second mobility management network element, the network exposure network element may learn that a communication system that serves the UE changes, and the changed communication system (that is, the second communication system) is a 5G communication system. Further, the network exposure network element may send first event monitoring request information to the AMF, to continue to perform event monitoring on the UE.

In an implementation, the first information may further include first indication information, and the first indication information indicates that the communication system that serves the UE changes. The subscriber data management network element includes the first indication information in the first information, to notify the network exposure network element that a reason for sending the identification information and the address information of the second mobility management network element to the network exposure network element is that the communication system that serves the UE changes.

In an implementation, the first request information may further include second indication information, and the second indication information indicates that there is no interface between the first mobility management network element and the second mobility management network element. In this case, after receiving the first request information, the subscriber data management network element may learn that there is no interface between the first mobility management network element and the second mobility management network element. This means that the first mobility management network element cannot learn the identification information and the address information of the second mobility management network element. In this case, the subscriber data management network element may send the identification information and the address information of the second mobility management network element to the event notification address of the network exposure network element, so that the network exposure network element may continue to perform event monitoring on the UE by using the second mobility management network element. In other words, the subscriber data management network element may send the first information to the event notification address of the network exposure network element based on the second indication information. Alternatively, the first request information further includes third indication information, and the third indication information indicates the subscriber data management network element to send the identification information and the address information of the second mobility management network element to the event notification address of the network exposure network element.

It should be noted that, that content indicated by the first indication information is that "the communication system that serves the UE changes" is used as an example. In specific implementation, a manner in which the network exposure network element learns that the communication system that serves the UE changes, or the UE has initiated (or is about to initiate) a procedure of being handed over (or moving) from the first communication system to the second communication system may fall within the protection scope of this application. For example, that "the communication system that serves the UE changes" may be described as: "a serving system of the UE changes", "network handover", "a handover procedure has been initiated", "the UE is handed over", "UE handover", "the UE has initiated a handover procedure", "the UE is about to initiate a handover procedure", "the UE is initiating a handover procedure", "UE is being handed over", "the UE is being handed over (or moving) from the first communication system to the second communication system", "the UE has completed handover", or "the UE has been handed over (or moved) from the first communication system to the second communication system". It should be further noted that the "handover procedure" mentioned in this embodiment of this application is "a procedure in which the UE is handed over or moves from the first communication system to the second communication system", and "handover" is that "the UE is handed over (or moves) from the first communication system to the second communication system".

In an implementation, whether the UE is in the single-registration mode may be determined based on subscription information of the UE. The subscription information of the UE may be stored in the subscriber data management network element.

Step S604: The network exposure network element sends the first event monitoring request information to the second mobility management network element based on the identification information and the address information of the second mobility management network element, where the first event monitoring request information includes the foregoing identifier of the UE and the foregoing event notification address, and the first event monitoring request information indicates the second mobility management network element to monitor a first event of the UE.

After receiving the first information, the network exposure network element may learn that the communication system that serves the UE changes. This means that the mobility management network element that serves the UE changes from the first mobility management network element to the second mobility management network element. In this case, the network exposure network element sends the first event monitoring request information to the second mobility management network element based on the identification information and the address information that are of the second mobility management network element and that are included in the first information, to indicate the second mobility management network element to monitor the first event of the UE, and may continue to perform event monitoring on the UE.

Event types of the first event and the second event may be the same or different. The event type may include but is not limited to: a change of a UE location, UE reachability, and whether the UE is roaming, or in a device-card separation. The event type may also be referred to as a monitoring type.

In an implementation, the foregoing first event monitoring request information further indicates a first event parameter required for monitoring the first event, and the second event monitoring request information further indicates a second event parameter required for monitoring the second event. The first event parameter and the second event parameter may be the same or different. It should be noted that an event parameter (for example, the first event parameter and the second event parameter) mentioned in this embodiment of this application may include one or more parameters. The event parameter mentioned in this embodiment of this application may include but is not limited to one or more of the following parameters: a geographical area, a maximum quantity of reports, or monitoring duration. For content of the geographical area, the maximum quantity of reports, or the monitoring duration, refer to the foregoing descriptions. Details are not described herein again.

In an implementation, the network exposure network element may determine the first event parameter based on the second event parameter. In other words, the first event is determined based on the second event. For example, if a maximum quantity of reports included in the second event parameter is 10, and a mobility management network element (that is, the first mobility management network element) that serves the UE in the first communication system has fed back three event reports to the network exposure network element in a period in which the UE camps on the first communication system, the network exposure network element may determine a maximum quantity of reports in the first event parameter as 10-3=7.

In an implementation, the first event is an event that the second communication system supports monitoring. The second event is an event that the first communication system supports monitoring. There may be one or more second events (that the network exposure network element indicates the first mobility management network element to monitor), and there may also be one or more first events. In an implementation, in the one or more second events that the network exposure network element indicates the first mobility management network element to monitor, the network exposure network element may use a second event that the second communication system supports monitoring as a first event. For example, the first communication system supports monitoring the event 1, the event 2, and an event 3, and the network exposure network element indicates the first mobility management network element to monitor the event 1, the event 2, and the event 3 (that is, the second event includes the event 1, the event 2, and the event 3). If the second communication system supports monitoring the event 1 but does not support monitoring the event 2 and the event 3, the network exposure network element may use the event 1 as a first event.

In this embodiment of this application, the network exposure network element may successfully address the second mobility management network element by using the identification information and the address information of the second mobility management network element, and may further send the first event monitoring request information to the second mobility management network element. Therefore, event monitoring may continue to be performed on the UE by using the second mobility management network element.

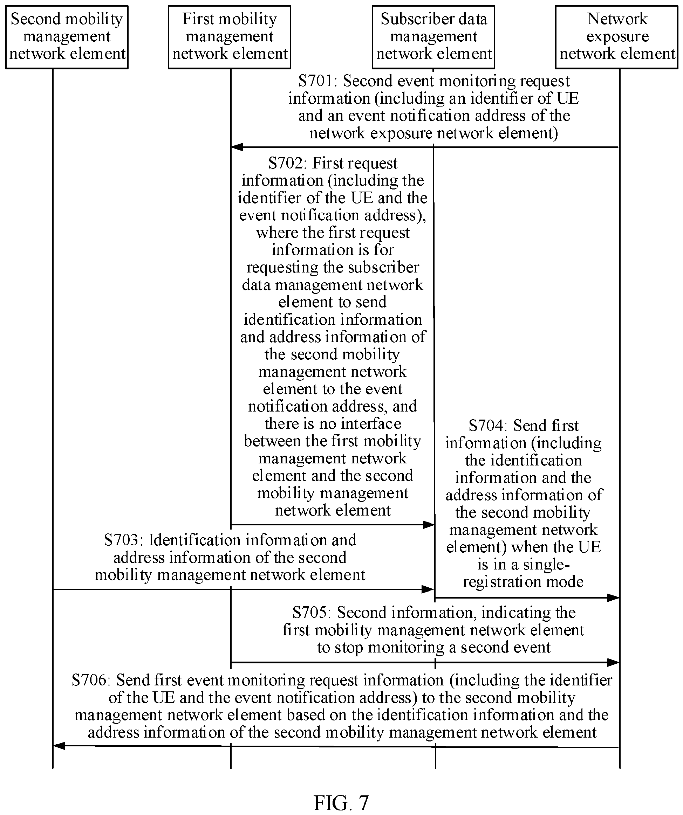

FIG. 7 is a schematic flowchart of another event management method according to an embodiment of this application. The following uses an example in which the event management method is performed by a network exposure network element, a first mobility management network element, a subscriber data management network element, and a second mobility management network element for description. The method may include but is not limited to the following steps.

Step S701: The network exposure network element sends second event monitoring request information to the first mobility management network element, where the second event monitoring request information includes an identifier of UE and an event notification address of the network exposure network element, the second event monitoring request information indicates the first mobility management network element to monitor a second event of the UE, and the first mobility management network element is a mobility management network element that serves the UE in a first communication system.

It should be noted that for an execution process of step S701, refer to specific descriptions of step S601 in FIG. 6. Details are not described herein again.

Step S702: The first mobility management network element sends first request information to the subscriber data management network element, where the first request information includes the foregoing identifier of the UE and the foregoing event notification address, the first request information is for requesting the subscriber data management network element to send identification information and address information of the second mobility management network element to the event notification address, there is no interface between the first mobility management network element and the second mobility management network element, and the second mobility management network element is a mobility management network element that serves the UE in a second communication system.

Step S703: The subscriber data management network element receives the identification information and the address information of the second mobility management network element from the second mobility management network element.

Step S704: The subscriber data management network element sends first information to the foregoing event notification address when the foregoing UE is in a single-registration mode, where the first information includes the identification information and the address information of the second mobility management network element.

It should be noted that for an execution process of step S702 to step S704, refer to specific descriptions of step S601 to step S603 in FIG. 6. Details are not described herein again.

Step S705: The first mobility management network element sends second information to the foregoing event notification address when determining that a communication system that serves the UE changes, where the second information indicates the first mobility management network element to stop monitoring the foregoing second event.

If the first mobility management network element determines that the communication system that serves the UE changes, it means that the first mobility management network element cannot continue to perform event monitoring on the UE. In this case, the first mobility management network element sends the second information to the event notification address of the network exposure network element. After receiving the second information, the network exposure network element may learn that the first mobility management network element stops monitoring the foregoing second event (that is, stops monitoring an event of the UE). Further, the network exposure network element may then monitor the UE by using the second mobility management network element.

In this embodiment of this application, when receiving a deregistration message from the UE, the first mobility management network element may determine that the communication system that serves the UE changes. That the UE sends the deregistration message to the first mobility management network element indicates that deregistration is initiated in the first communication system.

Optionally, after receiving the second information, the network exposure network element may send an acknowledgment message for the second information to the first mobility management network element, to notify the first mobility management network element that the network exposure network element has successfully received the second information. Correspondingly, after receiving the acknowledgment message, the first mobility management network element may delete a mobility management context of the UE stored in the first mobility management network element.

It should be noted that, that content indicated by the second information is that "the first mobility management network element stops monitoring the foregoing second event" is used as an example. In specific implementation, a manner in which the network exposure network element learns that the first mobility management network element stops monitoring the foregoing second event may fall within the protection scope of this application. For example, that "the first mobility management network element stops monitoring the foregoing second event" may be described as: "the first mobility management network element cannot monitor the foregoing second event", "the first mobility management network element no longer monitors the foregoing second event", "an event status of the second event changes", or "an event status of the second event becomes inactive (Inactive)". In this embodiment of this application, an event status of an event (for example, a first event or the second event) is for representing whether a mobility management network element configured to monitor the event can normally monitor the event. The event status may be active or inactive. If the event status is active, it indicates that the event can be normally monitored. If the event status is abnormal, it indicates that the event cannot be normally monitored. A reason why the event cannot be normally monitored may include but is not limited to: the mobility management network element stops monitoring the event, or the mobility management network element cannot monitor the event. Optionally, the event status may also be referred to as a monitoring status.

In an implementation, the second information may further indicate a reason for stopping monitoring, and the reason for stopping monitoring is that the communication system that serves the UE changes.

It should be noted that, that the reason for stopping monitoring is that "the communication system that serves the UE changes" is used as an example. In specific implementation, a manner in which the network exposure network element learns that the communication system that serves the UE changes, or the UE has initiated (or is about to initiate) a procedure of being handed over (or moving) from the first communication system to the second communication system may fall within the protection scope of this application. For example, the reason for stopping monitoring may be described as: "the communication system that serves the UE changes", "a serving system of the UE changes", "network handover", "the UE is handed over", "UE handover", "the UE has initiated a handover procedure", "the UE is about to initiate a handover procedure", "the UE is initiating a handover procedure", "UE is being handed over", "the UE is being handed over (or moving) from the first communication system to the second communication system", "the UE has completed handover", or "the UE has been handed over (or moved) from the first communication system to the second communication system".

In an implementation, the second information may include a first event report, and the first event report is an event report that has been generated by the first mobility management network element but has not been reported to the event notification address of the network exposure network element. The first event report is generated when the second event is detected. In this manner, all event reports generated when the second event of the UE is monitored in the first communication system may be fed back to the network exposure network element, that is, this helps avoid loss of the event report. In an implementation, each time the first mobility management network element generates a first event report, the first mobility management network element may immediately send the first event report to the event notification address of the network exposure network element. In another implementation, the first mobility management network element may accumulate a plurality of generated first event reports, carry the plurality of accumulated first event reports in one message, and send the message to the event notification address of the network exposure network element. To be specific, after generating the first event report, the first mobility management network element may not immediately send the first event report to the event notification address of the network exposure network element. Optionally, when determining that the communication system that serves the UE changes, the first mobility management network element may query whether an event report that has been generated but has not been reported to the event notification address of the network exposure network element exists. If the event report exists, the event report (that is, the first event report) is included in the second information and sent to the event notification address of the network exposure network element.

Step S706: The network exposure network element sends first event monitoring request information to the second mobility management network element based on the identification information and the address information of the second mobility management network element, where the first event monitoring request information includes the foregoing identifier of the UE and the foregoing event notification address, and the first event monitoring request information indicates the second mobility management network element to monitor the first event of the UE.

It should be noted that for an execution process of step S706, refer to specific descriptions of step S604 in FIG. 6. Details are not described herein again.

In this embodiment of this application, the network exposure network element may successfully address the second mobility management network element by using the identification information and the address information of the second mobility management network element, and may further send the first event monitoring request information to the second mobility management network element. Therefore, event monitoring may continue to be performed on the UE by using the second mobility management network element.

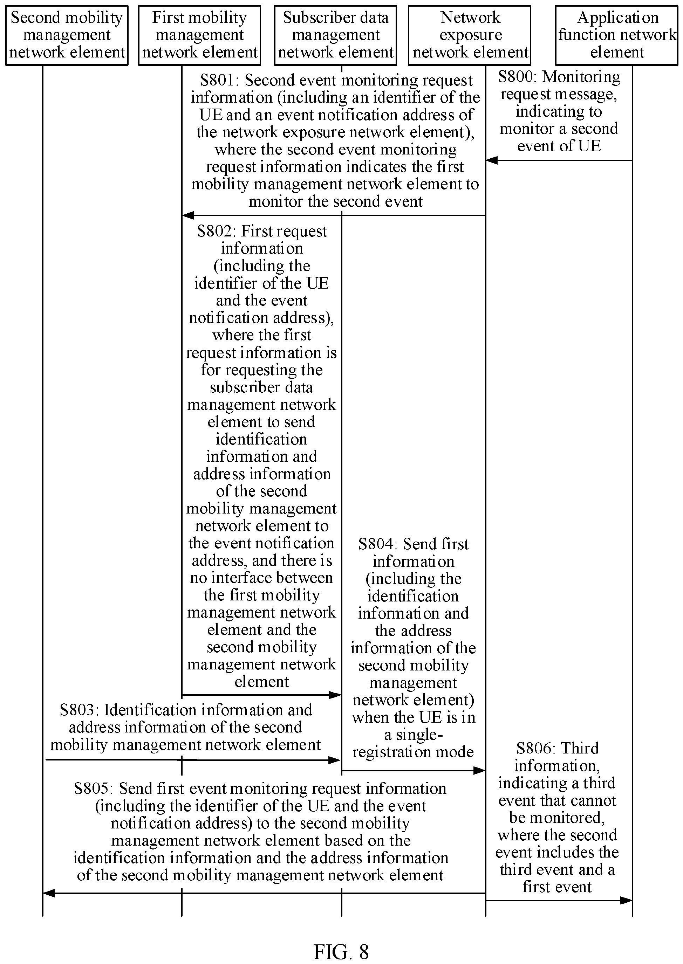

FIG. 8 is a schematic flowchart of another event management method according to an embodiment of this application. The following uses an example in which the event management method is performed by a network exposure network element, a first mobility management network element, a subscriber data management network element, and a second mobility management network element for description. The method may include but is not limited to the following steps.

Step S800: An application function network element sends a monitoring request message to the network exposure network element, where the monitoring request message indicates to monitor a second event of UE.

The monitoring request message indicates the first mobility management network element to monitor the second event of the UE. For content of the monitoring request message in step S800, refer to specific descriptions of the monitoring request message 1, the monitoring request message 3, and/or the monitoring request message 5 described above. Details are not described herein again.

In this embodiment of this application, the network exposure network element may send second event monitoring request information to the first mobility management network element after receiving the monitoring request message from the application function network element.

Step S801: The network exposure network element sends the second event monitoring request information to the first mobility management network element, where the second event monitoring request information includes an identifier of the UE and an event notification address of the network exposure network element, the second event monitoring request information indicates the first mobility management network element to monitor the second event of the UE, and the first mobility management network element is a mobility management network element that serves the UE in a first communication system.

Step S802: The first mobility management network element sends first request information to the subscriber data management network element, where the first request information includes the foregoing identifier of the UE and the foregoing event notification address, the first request information is for requesting the subscriber data management network element to send identification information and address information of the second mobility management network element to the event notification address, there is no interface between the first mobility management network element and the second mobility management network element, and the second mobility management network element is a mobility management network element that serves the UE in a second communication system.

Step S803: The subscriber data management network element receives the identification information and the address information of the second mobility management network element from the second mobility management network element.

Step S804: The subscriber data management network element sends first information to the foregoing event notification address when the foregoing UE is in a single-registration mode, where the first information includes the identification information and the address information of the second mobility management network element.

Step S805: The network exposure network element sends first event monitoring request information to the second mobility management network element based on the identification information and the address information of the second mobility management network element, where the first event monitoring request information includes the foregoing identifier of the UE and the foregoing event notification address, and the first event monitoring request information indicates the second mobility management network element to monitor a first event of the UE.

It should be noted that for an execution process of step S801, refer to specific descriptions of step S601 in FIG. 6. For an execution process of step S802 to step S805, refer to specific descriptions of step S601 to step S604 in FIG. 6. Details are not described herein again.

Step S806: The network exposure network element sends third information to the foregoing application function network element, where the third information indicates a third event that cannot be monitored. There are a plurality of second events, and the second event includes the third event and the first event.

The second event is an event that the application function network element indicates to monitor, and the second event is an event that the first communication system supports monitoring. The first event is an event that the second communication system supports monitoring. The third event is an event that the second communication system does not support monitoring. In this manner, the application function network element can learn of an event (that is, the third event) that the second communication system does not support monitoring.

In an implementation, the network exposure network element presents a service capability supported by a 3GPP network to the application function network element through an API, that is, the application function network element implements event monitoring by invoking the API. For different events, the application function network element invokes different APIs. If charging for event monitoring is changed by a quantity of times that the application function network element invokes the API, the application function network element is notified of the event that the second communication system does not support monitoring. This helps improve charging accuracy. For example, an event (that is, the second event) that the application function network element indicates to monitor includes an event 1 and an event 2. When the UE camps on the first communication system, the application function network element may monitor the event 1 by invoking an API 1, and may monitor the event 2 by invoking an API 2. After the UE is handed over (or moves) from the first communication system to the second communication system, the second communication system supports monitoring the event 1 but does not support monitoring the event 2 (that is, the event 2 is a third event, and the event 1 is a first event). If the application function network element learns that the second communication system does not support monitoring the event 2, the API 2 may no longer be invoked. Because the event 2 cannot be monitored even if the API 2 is invoked, and a charging statistical result is affected.

In an implementation, the network exposure network element learns in advance an event that the first communication system supports monitoring and an event that the second communication system supports monitoring, to determine the third event. Alternatively, the network exposure network element determines the third event by using a message returned by the second mobility management network element. For example, the first event monitoring request information sent by the network exposure network element to the second mobility management network element includes a first event parameter required for monitoring the first event, and the first event monitoring request information indicates the second mobility management network element to monitor, based on the first event parameter, the event that the second communication system supports monitoring. If the second mobility management network element returns an event subscription response message, the event subscription response message indicates that the second communication system supports monitoring the first event in the second event but does not support monitoring the third event in the second event.

In an implementation, the third information may further indicate a reason why monitoring cannot be performed, and the reason why monitoring cannot be performed is that a communication system that serves the UE changes.

It should be noted that, that the reason why monitoring cannot be performed is that "the communication system that serves the UE changes" is used as an example. In specific implementation, a manner in which the application function network element learns that the communication system that serves the UE changes, or the UE has initiated (or is about to initiate) a procedure of being handed over (or moving) from the first communication system to the second communication system may fall within the protection scope of this application. For example, the reason why monitoring cannot be performed may be described as: "the communication system that serves the UE changes", "a serving system of the UE changes", "network handover", "the UE is handed over", "UE handover", "the UE has initiated a handover procedure", "the UE is about to initiate a handover procedure", "the UE is initiating a handover procedure", "UE is being handed over", "the UE is being handed over (or moving) from the first communication system to the second communication system", "the UE has completed handover", "the UE has been handed over (or moved) from the first communication system to the second communication system", or "a current network does not support".

It should be noted that event reporting procedures in the first communication system and the second communication system are not described in the embodiments of FIG. 6 to FIG. 8, but this constitutes no limitation on embodiments of this application. The event reporting procedure in the first communication system and the event reporting procedure in the second communication system are similar to an event reporting procedure in a 4G network (or an event reporting procedure in a 5G network). Refer to related descriptions of the event reporting procedure in the 4G network and the event reporting procedure in the 5G network in FIG. 2 to FIG. 4. Details are not described herein again.

In this embodiment of this application, the network exposure network element may successfully address the second mobility management network element by using the identification information and the address information of the second mobility management network element, and may further send the first event monitoring request information to the second mobility management network element. Therefore, event monitoring may continue to be performed on the UE by using the second mobility management network element. In addition, the network exposure network element notifies the application function network element of the event (that is, the third event) that the second communication system does not support monitoring. This helps improve charging accuracy.

Corresponding to the methods provided in the foregoing method embodiments, embodiments of this application further provide corresponding apparatuses, including corresponding modules configured to perform the foregoing embodiments. The module may be software, hardware, or a combination of software and hardware.

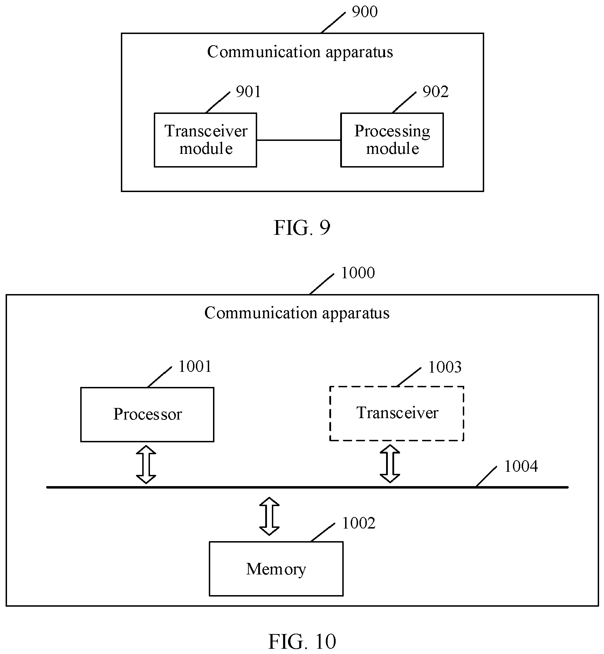

FIG. 9 is a schematic diagram of a structure of a communication apparatus according to this application. The communication apparatus 900 shown in FIG. 9 includes a transceiver module 901 and a processing module 902.

In a design, the apparatus 900 is a subscriber data management network element.

For example, the processing module 902 is configured to invoke the transceiver module 901 to receive first request information from a first mobility management network element, where the first request information includes an identifier of UE and an event notification address of a network exposure network element, the first request information is for requesting the apparatus 900 to send identification information and address information of a second mobility management network element to the event notification address, the second mobility management network element is a mobility management network element that serves the UE in a second communication system, the first mobility management network element is a mobility management network element that serves the UE in a first communication system, and there is no interface between the first mobility management network element and the second mobility management network element. The processing module 902 is further configured to invoke the transceiver module 901 to receive the identification information and the address information of the second mobility management network element from the second mobility management network element and send first information to the event notification address when the UE is in a single-registration mode, where the first information includes the identification information and the address information of the second mobility management network element.

When the apparatus 900 is the subscriber data management network element, the apparatus 900 is configured to implement a function of the subscriber data management network element in the embodiments shown in FIG. 6 to FIG. 8.

In a design, the apparatus 900 is a network exposure network element.

For example, the processing module 902 is configured to invoke the transceiver module 901 to receive first information from a subscriber data management network element, where the first information includes identification information and address information of a second mobility management network element, and the second mobility management network element is a mobility management network element that serves UE in a second communication system. The processing module 902 is further configured to invoke the transceiver module 901 to send first event monitoring request information to the second mobility management network element based on the identification information and the address information of the second mobility management network element, where the first event monitoring request information includes an identifier of the UE and an event notification address of the apparatus 900, and the first event monitoring request information indicates the second mobility management network element to monitor a first event of the UE.

When the apparatus 900 is the network exposure network element, the apparatus 900 is configured to implement a function of the network exposure network element in the embodiments shown in FIG. 6 to FIG. 8.

In a design, the apparatus 900 is a first mobility management network element.

For example, the processing module 902 is configured to invoke the transceiver module 901 to send first request information to a subscriber data management network element, where the first request information includes an identifier of UE and an event notification address of a network exposure network element, the first request information is for requesting the subscriber data management network element to send identification information and address information of a second mobility management network element to the event notification address, the apparatus 900 is a mobility management network element that serves the UE in a first communication system, the second mobility management network element is a mobility management network element that serves the UE in a second communication system, and there is no interface between the apparatus 900 and the second mobility management network element.

When the apparatus 900 is the first mobility management network element, the apparatus 900 is configured to implement a function of the first mobility management network element in the embodiments shown in FIG. 6 to FIG. 8.

FIG. 10 is a schematic diagram of a structure of another communication apparatus according to this application. The communication apparatus 1000 shown in FIG. 10 includes at least one processor 1001 and a memory 1002, and optionally, may further include a transceiver 1003.

The memory 1002 may be a volatile memory, for example, a random access memory. Alternatively, the memory may be a nonvolatile memory, for example, a read-only memory, a flash memory, a hard disk drive (hard disk drive, HDD), or a solid-state drive (solid-state drive, SSD). Alternatively, the memory 1002 is any other medium that can carry or store expected program code in a form of an instruction structure or a data structure and that can be accessed by a computer, but is not limited thereto. The memory 1002 may be a combination of the foregoing memories.

A specific connection medium between the processor 1001 and the memory 1002 is not limited in this embodiment of this application. In this embodiment of this application, in the figure, the memory 1002 and the processor 1001 are connected through a bus 1004, and the bus 1004 is represented by a bold line in the figure. A connection manner between other components is merely an example for description, and is not limited thereto. The bus 1004 may be classified into an address bus, a data bus, a control bus, and the like. For ease of representation, only one bold line is for representing the bus in FIG. 10, but this does not mean that there is only one bus or only one type of bus.

The processor 1001 may have a data transceiver function, and can communicate with another device. In the apparatus shown in FIG. 10, an independent data transceiver module, for example, the transceiver 1003, may alternatively be disposed, and is configured to send and receive data. When communicating with the another device, the processor 1001 may perform data transmission by using the transceiver 1003.

In an example, when a subscriber data management network element uses a form shown in FIG. 10, the processor in FIG. 10 may invoke computer-executable instructions stored in the memory 1002, so that the subscriber data management network element performs the method performed by the subscriber data management network element in any one of the foregoing method embodiments.

In an example, when a network exposure network element uses a form shown in FIG. 10, the processor in FIG. 10 may invoke computer-executable instructions stored in the memory 1002, so that the network exposure network element performs the method performed by the network exposure network element in any one of the foregoing method embodiments.

In an example, when a first mobility management network element uses a form shown in FIG. 10, the processor in FIG. 10 may invoke computer-executable instructions stored in the memory 1002, so that the first mobility management network element performs the method performed by the first mobility management network element in any one of the foregoing method embodiments.

Specifically, functions/implementation processes of the processing module and the transceiver module in FIG. 9 may be implemented by the processor 1001 in FIG. 10 by invoking the computer-executable instructions stored in the memory 1002. Alternatively, a function/implementation process of the processing module in FIG. 9 may be implemented by the processor 1001 in FIG. 10 by invoking the computer-executable instructions stored in the memory 1002, and a function/implementation process of the transceiver module in FIG. 9 may be implemented by the transceiver 1003 in FIG. 10.

An embodiment of this application further provides an event management system. The system may include the subscriber data management network element, the network exposure network element, the first mobility management network element, and the second mobility management network element in the corresponding embodiments in FIG. 6 to FIG. 8. Optionally, the UE in the corresponding embodiments in FIG. 6 to FIG. 8 is further included. Optionally, the application function network element in the corresponding embodiment in FIG. 8 is further included.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with another feature based on requirements. Correspondingly, the apparatus provided in this embodiment of this application may also correspondingly implement these features or functions. Details are not described herein again.

A person skilled in the art may further understand that various illustrative logical blocks (illustrative logical blocks) and steps (steps) that are listed in embodiments of this application may be implemented by using electronic hardware, computer software, or a combination thereof. Whether the functions are implemented by hardware or software depends on a particular application and a design requirement of the entire system. A person skilled in the art may use various methods to implement the described functions for corresponding applications, but it should not be considered that the implementation goes beyond the scope of embodiments of this application.

The solution described in this application may be implemented in various manners. For example, the technologies may be implemented by hardware, software, or a combination thereof. For hardware implementation, a processing module configured to execute the technologies in a communication apparatus (for example, a base station, a terminal, a network entity, a core network element, or a chip) may be implemented in one or more general-purpose processors, digital signal processors (digital signal processors, DSPs), digital signal processing devices, application-specific integrated circuits (application-specific integrated circuits, ASICs), programmable logic devices, field programmable gate arrays (field programmable gate arrays, FPGAs), another programmable logic apparatus, discrete gates or transistor logic, discrete hardware components, or any combinations thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but is not limited to these memories and any memory of another appropriate type.

This application further provides a computer-readable medium storing a computer program. When the computer program is executed by a computer, a function of any one of the foregoing method embodiments is implemented.

This application further provides a computer program product. When the computer program product is executed by a computer, a function of any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

It may be understood that an "embodiment" mentioned throughout this specification means that particular features, structures, or characteristics related to this embodiment are included in at least one embodiment of this application. Therefore, various embodiments throughout this specification do not necessarily refer to a same embodiment. In addition, these particular features, structures, or characteristics may be combined in one or more embodiments in any appropriate manner. It may be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

It may be further understood that in this application, "when" and "if" mean that an apparatus performs corresponding processing in an objective case. The terms are not intended to limit time, do not require a determining action when the apparatus is implemented, and do not imply that there is any other limitation.

An element represented by a singular number in this application is intended to represent "one or more", but does not represent "one and only one", unless otherwise specified. In this application, unless otherwise specified, "at least one" is intended to represent "one or more", and "a plurality of is intended to represent "two or more".

In addition, the terms "system" and "network" are usually used interchangeably in this specification. The term "and/or" in this specification describes only an association relationship between associated objects and represents that three relationships may exist. For example, A and/or B may represent the following three cases: Only A exists, both A and B exist, and only B exists. A may be singular or plural, and B may be singular or plural.

"Predefine" in this application may be understood as "define", "predefine", "store", "pre-store", "pre-negotiate", "pre-configure", "solidify", or "pre-burn".

A person of ordinary skill in the art may understand that, for ease and brief description, for a detailed working process of the foregoing system, apparatus, and unit, refer to a corresponding process in the foregoing method embodiments. Details are not described herein again.

For same or similar parts in embodiments of this application, reference may be made to each other. In embodiments of this application and the implementations/implementation methods in the embodiments, unless otherwise specified or logically conflicted, terms and/or descriptions are consistent and may be mutually referenced between different embodiments and between the implementations in the embodiments, and technical features in different embodiments and the implementations in the embodiments may be combined to form a new embodiment or an implementation based on an internal logical relationship thereof. The foregoing implementations of this application constitute no limitation on the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An event management method, wherein the method comprises:
receiving, by a subscriber data management network element, first request information from a first mobility management network element, wherein the first request information comprises an identifier of UE and an event notification address of a network exposure network element, the first request information is for requesting the subscriber data management network element to send identification information and address information of a second mobility management network element to the event notification address, the second mobility management network element is a mobility management network element that serves the UE in a second communication system, the first mobility management network element is a mobility management network element that serves the UE in a first communication system, and there is no interface between the first mobility management network element and the second mobility management network element;
receiving, by the subscriber data management network element, the identification information and the address information of the second mobility management network element from the second mobility management network element; and
sending, by the subscriber data management network element, first information to the event notification address when the UE is in a single-registration mode, wherein the first information comprises the identification information and the address information of the second mobility management network element.

2. The method according to claim 1, wherein the first information further comprises first indication information, and the first indication information indicates that a communication system that serves the UE changes.

3. The method according to claim 1 or 2, wherein the first request information further comprises second indication information, and the second indication information indicates that there is no interface between the first mobility management network element and the second mobility management network element; and
the sending, by the subscriber data management network element, first information to the event notification address comprises:
sending, by the subscriber data management network element, the first information to the event notification address based on the second indication information.

4. An event management method, wherein the method comprises:
receiving, by a network exposure network element, first information from a subscriber data management network element, wherein the first information comprises identification information and address information of a second mobility management network element, and the second mobility management network element is a mobility management network element that serves UE in a second communication system; and
sending, by the network exposure network element, first event monitoring request information to the second mobility management network element based on the identification information and the address information of the second mobility management network element, wherein the first event monitoring request information comprises an identifier of the UE and an event notification address of the network exposure network element, and the first event monitoring request information indicates the second mobility management network element to monitor a first event of the UE.

5. The method according to claim 4, wherein the first information further comprises first indication information, and the first indication information indicates that a communication system that serves the UE changes.

6. The method according to claim 4 or 5, wherein the method further comprises:
receiving, by the network exposure network element, second information from a first mobility management network element, wherein the second information indicates the first mobility management network element to stop monitoring a second event of the UE, the second information is sent by the first mobility management network element when the first mobility management network element determines that the communication system that serves the UE changes, and the first mobility management network element is a mobility management network element that serves the UE in a first communication system.

7. The method according to claim 6, wherein the second information further indicates a reason for stopping monitoring, and the reason for stopping monitoring is that the communication system that serves the UE changes.

8. The method according to claim 6 or 7, wherein the second information comprises a first event report, and the first event report is an event report that has been generated by the first mobility management network element but has not been reported to the event notification address.

9. The method according to any one of claims 6 to 8, wherein there are a plurality of second events, and the method further comprises:
sending, by the network exposure network element, third information to an application function network element, wherein the third information indicates a third event that cannot be monitored, the second event comprises the third event and the first event, and the second event is an event that the application function network element indicates to monitor.

10. The method according to claim 9, wherein the third information further indicates a reason why monitoring cannot be performed, and the reason why monitoring cannot be performed is that the communication system that serves the UE changes.

11. The method according to any one of claims 6 to 10, wherein the first event monitoring request information further indicates a first event parameter required for monitoring the first event, and second event monitoring request information further indicates a second event parameter required for monitoring the second event; and the method further comprises:
determining, by the network exposure network element, the first event parameter based on the second event parameter.

12. The method according to any one of claims 4 to 11, wherein the first event is an event that the second communication system supports monitoring.

13. An event management method, wherein the method comprises:
sending, by a first mobility management network element, first request information to a subscriber data management network element, wherein the first request information comprises an identifier of UE and an event notification address of a network exposure network element, the first request information is for requesting the subscriber data management network element to send identification information and address information of a second mobility management network element to the event notification address, the first mobility management network element is a mobility management network element that serves the UE in a first communication system, the second mobility management network element is a mobility management network element that serves the UE in a second communication system, and there is no interface between the first mobility management network element and the second mobility management network element.

14. The method according to claim 13, wherein the first request information further comprises second indication information, and the second indication information indicates that there is no interface between the first mobility management network element and the second mobility management network element.

15. The method according to claim 13 or 14, wherein the method further comprises:
sending, by the first mobility management network element, second information to the event notification address when determining that a communication system that serves the UE changes, wherein the second information indicates the first mobility management network element to stop monitoring a second event of the UE.

16. The method according to claim 15, wherein the second information further indicates a reason for stopping monitoring, and the reason for stopping monitoring is that the communication system that serves the UE changes.

17. The method according to claim 15 or 16, wherein the second information comprises a first event report, and the first event report is an event report that has been generated by the first mobility management network element but has not been reported to the event notification address.

18. An event management method, wherein the method comprises:
sending, by a first mobility management network element, first request information to a subscriber data management network element, wherein the first request information comprises an identifier of UE and an event notification address of a network exposure network element, the first request information is for requesting the subscriber data management network element to send identification information and address information of a second mobility management network element to the event notification address, the first mobility management network element is a mobility management network element that serves the UE in a first communication system, the second mobility management network element is a mobility management network element that serves the UE in a second communication system, and there is no interface between the first mobility management network element and the second mobility management network element;
receiving, by the subscriber data management network element, the first request information, and receiving the identification information and the address information of the second mobility management network element from the second mobility management network element;
sending, by the subscriber data management network element, first information to the event notification address when the UE is in a single-registration mode, wherein the first information comprises the identification information and the address information of the second mobility management network element; and
receiving, by the network exposure network element, the first information, and sending first event monitoring request information to the second mobility management network element based on the identification information and the address information of the second mobility management network element, wherein the first event monitoring request information comprises the identifier of the UE and the event notification address of the network exposure network element, and the first event monitoring request information indicates the second mobility management network element to monitor a first event of the UE.

19. The method according to claim 18, wherein the first information further comprises first indication information, and the first indication information indicates that a communication system that serves the UE changes.

20. The method according to claim 18 or 19, wherein the first request information further comprises second indication information, and the second indication information indicates that there is no interface between the first mobility management network element and the second mobility management network element; and
the sending, by the subscriber data management network element, first information to the event notification address comprises:
sending, by the subscriber data management network element, the first information to the event notification address based on the second indication information.

21. The method according to any one of claims 18 to 20, wherein the method further comprises:
sending, by the first mobility management network element, second information to the event notification address when determining that the communication system that serves the UE changes, wherein the second information indicates the first mobility management network element to stop monitoring a second event of the UE; and
receiving, by the network exposure network element, the second information from the first mobility management network element.

22. The method according to claim 21, wherein the second information further indicates a reason for stopping monitoring, and the reason for stopping monitoring is that the communication system that serves the UE changes.

23. The method according to claim 21 or 22, wherein the second information comprises a first event report, and the first event report is an event report that has been generated by the first mobility management network element but has not been reported to the event notification address.

24. The method according to any one of claims 21 to 23, wherein there are a plurality of second events, and the method further comprises:
sending, by the network exposure network element, third information to an application function network element, wherein the third information indicates a third event that cannot be monitored, the second event comprises the third event and the first event, and the second event is an event that the application function network element indicates to monitor.

25. The method according to claim 24, wherein the third information further indicates a reason why monitoring cannot be performed, and the reason why monitoring cannot be performed is that the communication system that serves the UE changes.

26. The method according to any one of claims 21 to 25, wherein the first event monitoring request information further indicates a first event parameter required for monitoring the first event, and second event monitoring request information further indicates a second event parameter required for monitoring the second event; and the method further comprises:
determining, by the network exposure network element, the first event parameter based on the second event parameter.

27. The method according to any one of claims 18 to 26, wherein the first event is an event that the second communication system supports monitoring.

28. An event management system, wherein the system comprises a subscriber data management network element, a network exposure network element, and a first mobility management network element, wherein
the first mobility management network element is configured to send first request information to the subscriber data management network element, wherein the first request information comprises an identifier of UE and an event notification address of the network exposure network element, the first request information is for requesting the subscriber data management network element to send identification information and address information of a second mobility management network element to the event notification address, the first mobility management network element is a mobility management network element that serves the UE in a first communication system, the second mobility management network element is a mobility management network element that serves the UE in a second communication system, and there is no interface between the first mobility management network element and the second mobility management network element;
the subscriber data management network element is configured to: receive the first request information from the first mobility management network element, receive the identification information and the address information of the second mobility management network element from the second mobility management network element, and send first information to the event notification address when the UE is in a single-registration mode, wherein the first information comprises the identification information and the address information of the second mobility management network element; and
the network exposure network element is configured to: receive the first information from the subscriber data management network element, and send first event monitoring request information to the second mobility management network element based on the identification information and the address information of the second mobility management network element, wherein the first event monitoring request information comprises the identifier of the UE and the event notification address of the network exposure network element, and the first event monitoring request information indicates the second mobility management network element to monitor a first event of the UE.

29. The system according to claim 28, wherein the first information further comprises first indication information, and the first indication information indicates that a communication system that serves the UE changes.

30. The system according to claim 28 or 29, wherein the first request information further comprises second indication information, and the second indication information indicates that there is no interface between the first mobility management network element and the second mobility management network element; and
the subscriber data management network element is specifically configured to send the first information to the event notification address based on the second indication information.

31. The system according to any one of claims 28 to 30, wherein
the first mobility management network element is further configured to send second information to the event notification address when determining that the communication system that serves the UE changes, wherein the second information indicates the first mobility management network element to stop monitoring a second event of the UE; and
the network exposure network element is further configured to receive the second information from the first mobility management network element.

32. The system according to claim 31, wherein the second information further indicates a reason for stopping monitoring, and the reason for stopping monitoring is that the communication system that serves the UE changes.

33. The system according to claim 31 or 32, wherein the second information comprises a first event report, and the first event report is an event report that has been generated by the first mobility management network element but has not been reported to the event notification address.

34. The system according to any one of claims 31 to 33, wherein there are a plurality of second events; and
the network exposure network element is further configured to send third information to an application function network element, wherein the third information indicates a third event that cannot be monitored, the second event comprises the third event and the first event, and the second event is an event that the application function network element indicates to monitor.

35. The system according to claim 34, wherein the third information further indicates a reason why monitoring cannot be performed, and the reason why monitoring cannot be performed is that the communication system that serves the UE changes.

36. The system according to any one of claims 31 to 35, wherein the first event monitoring request information further indicates a first event parameter required for monitoring the first event, and second event monitoring request information further indicates a second event parameter required for monitoring the second event; and
the network exposure network element is further configured to determine the first event parameter based on the second event parameter.

37. The system according to any one of claims 28 to 36, wherein the first event is an event that the second communication system supports monitoring.

38. A communication apparatus, wherein the apparatus comprises a processing module and a transceiver module, and the processing module and the transceiver module are used in the apparatus to perform the method according to any one of claims 1 to 17.

39. A communication apparatus, wherein the apparatus comprises a processor, the processor is coupled to a memory, and the memory is configured to store a program; and when the program is executed by the processor, the apparatus is enabled to perform the method according to any one of claims 1 to 17.

40. A computer-readable storage medium, wherein the computer-readable storage medium stores a computer program, and when the computer program is executed, a computer is enabled to perform the method according to any one of claims 1 to 17.
